# EUROPEAN PATENT SPECIFICATION

(11) **EP 1 160 038 B1**
(45) Date of publication and mention of the grant of the patent: **20.04.2005**
(21) Application number: 00124390.6
(22) Date of filing: 21.11.2000
(51) Int. Cl.: B23C 5/10, B23C 5/20, B23C 5/22

(54) **Throwaway tip and throwaway-type cutting tool**
Schneideinsatz und Schneidwerkzeug
Plaquette et outil de coupe

(30) Priority: 30.05.2000 JP 2000160902; 15.06.2000 JP 2000180438; 08.06.2000 EP 00111861
(43) Date of publication of application: 05.12.2001
(73) Proprietor: MITSUBISHI MATERIALS CORPORATION, Chiyoda-ku, Tokyo (JP)
(72) Inventor: Nagaya, Hidehiko, Mitsubishi Materials Corp., Yuuki-gun, Ibaraki-ken (JP); Shimomura, Hiroshi, Mitsubishi Materials Corp., Yuuki-gun, Ibaraki-ken (JP)
(74) Representative: HOFFMANN - EITLE

(56) References cited:
- US-A- 3 226 797
- US-A- 5 944 456
- PATENT ABSTRACTS OF JAPAN vol. 011, no. 057 (M-564), 21 February 1987 (1987-02-21) & JP 61 219503 A (MITSUBISHI), 29 September 1986 (1986-09-29)
- PATENT ABSTRACTS OF JAPAN vol. 1999, no. 902, 26 February 1999 (1999-02-26) & JP 10 291115 A (HITACHI TOOL ENG CO), 4 November 1998 (1998-11-04)

## Description

### BACKGROUND OF THE INVENTION

### Field of the invention

The present invention relates to a throwaway tip and a throwaway-type cutting tool, such as an end-mill, to which the throwaway tip is mounted .

The invention in particular relates to a throwaway tip according to the preamble of claim 1, as known from US-A-3226797.

### Description of the Related Art .

Hitherto, in some throwaway-type end mills in which a plurality of, for example, two, parallelogram plate-like throwaway tips are mounted to the distal end of a tool body, and which are capable of performing a boring operation, one tip has been arranged so that a long cutting edge is defined as a front cutting edge and a short cutting edge is defined as an outer peripheral cutting edge, and the other tip has been arranged so that a short cutting edge and a long cutting edge is defined as a front cutting edge and a long cutting edge is defined as an outer peripheral cutting edge.

In this case, if the two tips have the same shape and size, they are conveniently administered or replaced. When such an end mill is used for a shoulder-cutting operation or a drilling operation with the outer peripheral cutting edges provided along the rotation axis of the tool body, for example, when the front cutting edge of one tip is provided so that an outer-peripheral comer-side cutting edge is projected at the distal end to gradually incline inward to a base end, the inner corner cutting edge of the outer tip will project toward the distal end from the outer-peripheral-corner-side cutting edge, so that the front cutting edge is easily chipped at low speed.

In order to overcome such a drawback, when the front cutting edge of the other tip is arranged in a radial direction so as to prevent the inner comer cutting edge from projecting toward the distal end, since the outer peripheral cutting edge of the other tip is inclined inward from the outer peripheral cutting edge of one tip and does not serve as the outer peripheral cutting edge, the outer peripheral cutting edge performs cutting with a single edge of one tip so that the front cutting edge is easily chipped and cutting efficiency is low.

As an invention for improving such a defect, Japanese Unexamined Patent Application Publication No. 10-291115 discloses an end mill. In the end mill two types of parallelogram plate-like tips are used, which are in line symmetry and are rotated in opposite directions. A short cutting edge of one tip is used as a front cutting edge, and a long cutting edge of the other tip is used as a front cutting edge, thereby adopting an arrangement such that an outer peripheral comer-side cutting edge of each of the front cutting edges is projected toward the distal end from an inner comer cutting edge. This can perform a cutting operation using outer peripheral comer-side cutting edges as two cutting edges, and can improve cutting efficiency by restricting chipping of the outer-peripheral-corner-side cutting edges.

In such a end mill, however, two types of tips having different outer shapes should be prepared, thereby making administration and replacement complicated, running costs increase, and the cost of manufacturing the tip increase.

### Summary of the Invention

In consideration of these actual circumstances, it is an object of the present invention to provide a throwaway tip including a plurality of types of cutting edges capable of arranging different cutting edges thereon.

It is another object of the present invention to provide a cutting tool capable of projecting outer peripheral corner-side cutting edges toward the distal end thereof using one type of throwaway tip.

This object is solved by a throwaway tip with the features of claim 1 and a throwaway type cutting tool with the features of claim 11, 15, 16 or 18. Advantageous embodiments are characterized by the depending claims.

### Brief Description of the Drawings

A more complete appreciation of the invention and many of the attendant advantages thereof will be readily obtained as the same becomes better understood by reference to the following detailed description when considered in connection with the accompanying drawings.
Figure 1(a) is a plan view which shows a throwaway tip according to a first embodiment of the present invention.
Figure 1 (b) is a side view, as seen from the direction A in Figure 1 (a).
Figure 1 (c) is a side view, as seen from the direction B in Figure 1 (a).
Figure 2 is a partial side view of an end mill to which two throwaway tips shown in Figure 1 are mounted.
Figure 3 is a front view of the end mill shown in Figure 2.
Figure 4 is a side view of the end mill shown in Figure 2, as seen from the direction of an outer peripheral cutting edge.
Figure 5 is a side view of an end mill according to a second embodiment of the present invention.
Figure 6 is a side view of the end mill shown in Figure 5, a seen from the direction C1.
Figure 7 is a side view of the end mill shown in Figure 5, as seen from the direction D1.
Figure 8 (a) is a plan view which shows a throwaway tip according to a third embodiment of the present invention.
Figure 8 (b) is a side view of a tip shown in Figure 8 (a), as seen from the direction E1.
Figure 8 (c) is a side view of a tip shown in Figure 8 (a), as seen from the direction F1.
Figure 8 (d) is a side view of a tip shown in Figure 8 (a), as seen from the direction G 1.
Figure 9 is a front view of an end mill shown in Figure 8 to which the throwaway tip shown in Figure 8 is mounted.
Figure 10 is a side view of the end mill shown in Figure 8, as seen from the direction of one outer peripheral cutting edge.
Figure 11 is a side view of the end mill shown in Figure 8, as seen from the direction of the other outer peripheral cutting edge.
Figure 12 (a) is a front view which shows another example of an end mill to which a throwaway tip is mounted.
Figure 12 (b) is a front view which shows another example of an end mill to which a throwaway tip is mounted.
Figure 12 (c) is a front view which shows another example of an end mill to which a throwaway tip is mounted.
Figure 12 (d) is a front view which shows another example of an end mill to which a throwaway tip is mounted.
Figure 13 (a) is a plan view of a throwaway tip according to a modification. of the third embodiment.
Figure 13 (b) is a side view of a tip shown in Figure 13 (a), as seen from the direction H1.
Figure 13 (c) is a side view of a tip shown in Figure 13 (a), as seen from the direction I 1.
Figure 13 (d) is a side view of a tip shown in Figure 13 (a), as seen from the direction J 1.
Figure 13 (e) is a side view of a tip shown in Figure 13 (a), as seen from the direction K 1.
Figure 14 is a plan view which shows a throwaway tip according to an 4 th embodiment of the present invention.
Figure 15 is an side view of an end mill according to an 5 th embodiment of the present invention.
Figure 16 is a plan view of an throwaway tip according to an 5 th embodiment of the present invention.
Figure 17 (a) is an line sectional view which shows cross sectioned form of each part of a throwaway tip shown in Figure 16.
Figure 17 (b) is an M-M line sectional view of Figure 16.
Figure 18 is a principal part side view of an end mill shown in Figure 16 to which two throwaway tips are mounted.
Figure 19 is a front view of an end mill shown in Figure 18.
Figure 20 is a side view of the end mill shown in Figure 18, as seen of the direction of peripheral cutting edge.
Figure 21 is a side view of the end mill according to an 6 th embodiment of the present invention.
Figure 22 is a side view of an end mill shown in Figure 21, as seen from the direction of C2.
Figure 23 is a side view of an end mill shown in Figure 21, as seen from the direction of D 2.
Figure 24 ( a) is a plan view of the throwaway tip according to the 7 th embodiment of the present invention.
Figure 24 (b) is a side view of the tip shown in Figure 24 (a), as seen from the direction of E2.
Figure 24 (c) is a side view of the tip shown in Figure 24 (a), as seen from the direction of F 2.
Figure 24 (d) is a side view of the tip shown in Figure 24 (a), as seen from the direction of G 2.
Figure 25 is a front view of an end mill shown in Figure 24 to which the throwaway tip is mounted.
Figure 26 is a side view of an end mill shown in Figure 25, as seen from the direction of one outer peripheral cutting edge.
Figure 27 is a side view of an end mill shown in Figure 25, as seen from the direction of the other outer peripheral cutting tooth.
Figure 28 (a) is a plan view of a throwaway tip according to a modification of the 7 th embodiment.
Figure 28 (b) is a side view of a tip shown in Figure 28 (a), as seen from the direction of H 2.
Figure 28 (c) is a side view of a tip shown in Figure 28 (a), as seen from the direction of I 2.
Figure 28 (d) is a side view of a tip shown in Figure 28 (a), as seen from the direction of J 2.
Figure 28 (e) is a side view of a tip shown in Figure 28 (a), as seen from the direction of K 2.
Figure 29 is a front view of a throwaway tip according to the 8 th embodiment of the present invention.
Figure 30 is a side view of an end mill according to the 8 th embodiment of the present invention.
Figure 31 is a sectional view which shows sectional form of each part of throwaway tip according to the 9 th embodiment of the present invention.
Figure 32 is a sectional view which shows sectional form of each part of the throwaway tip according to 10 the embodiment of the present invention.

### Detailed Description of the Preferred Embodiments

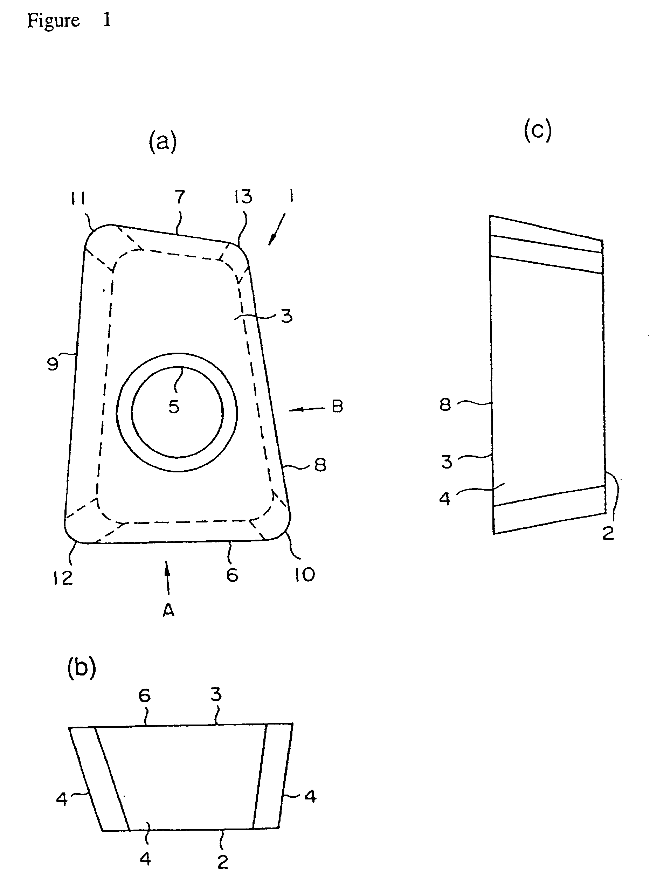

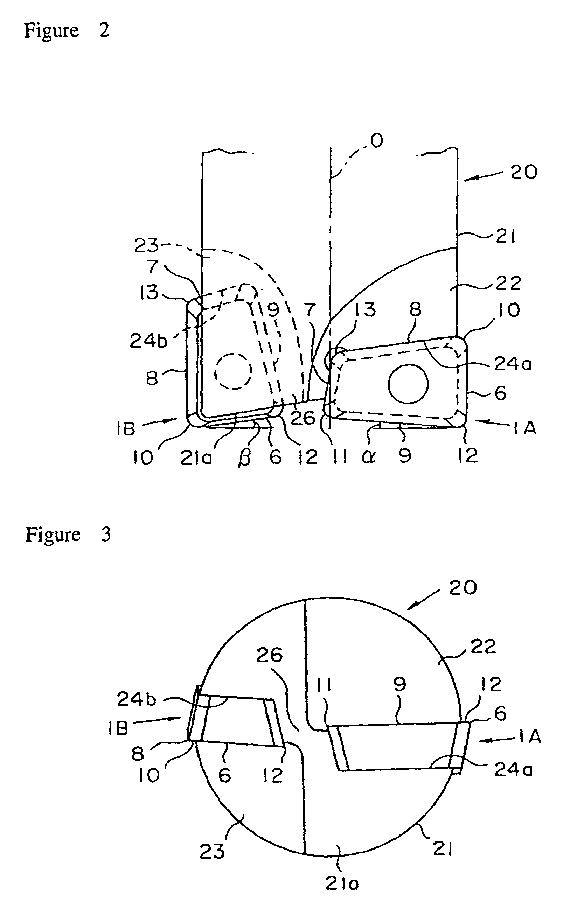

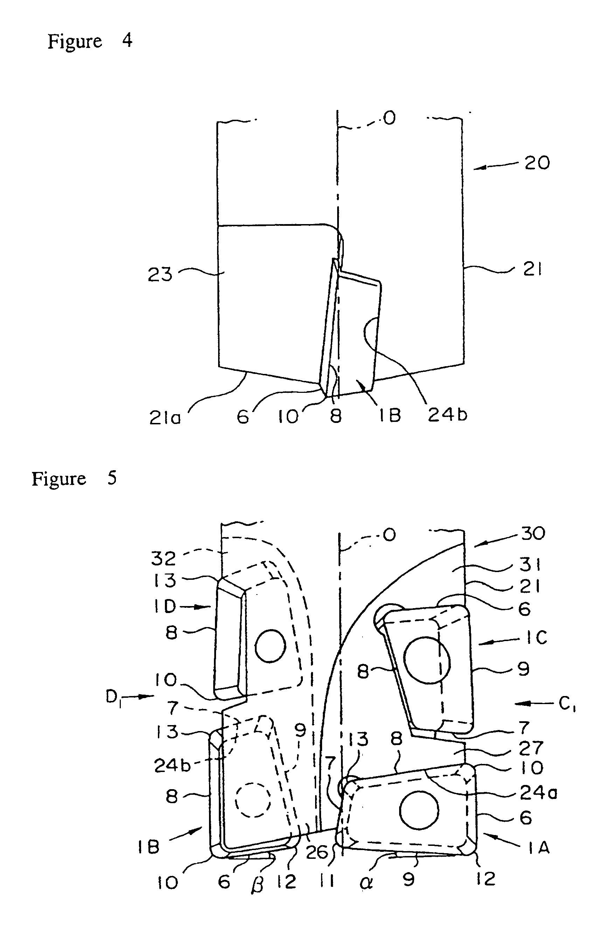

A throwaway tip and throwaway -type end mill according to embodiments of the present invention will now be described with reference to accompanying drawings. Figure 1 shows a throwaway tip according to a first embodiment, and Figure 2 to 4 show a throwaway-type end mill according to the first embodiment. Figure 1(a) is a plan view of the throwaway tip, Figure 1 (b) is a side view of the throwaway tip shown in Figure 1 (a), as seen from a direction A, Figure 1 (c) is a side view of the same, as seen from a direction B, Figure 2 is a partial side view of the end mill to which the throwaway tip shown in Figure 1 is mounted, Figure 3 is a front view of the end mill shown in Figure 2, and Figure 4 is a partial side view of the end mill shown in Figure 2, as seen from an outer peripheral cutting edge.

The throwaway tip (hereinafter, it may be referred to as tip) 1 according to the embodiment shown in Figure 1 is formed in substantially the shape of a rectangular plate, includes an upper surface 3 provided so as to oppose a lower surface 2 constituting a seating surface, and four side faces 4 gradually inclined outward with a positive inclination angle (relief angle) from the lower surface 2 to the upper surface 3, and is defined as a positive tip. The tip 1 is formed with a bolt-securing insertion hole 5 passing through central portions of the upper surface 3 and the lower surface 2. The upper surface 3 and the lower surface 2 are formed in substantially the shape of a parallelogram plate. In four ridges of the upper surface 3, the opposing ridges of each pair are defined as short cutting edges and long cutting edges, one of two cutting edges constituting the short cutting edges is defined as a relatively-long first short cutting edge 6, and the other cutting edge is defined as a relatively-short second cutting edge 7. The other two opposing sides constituting the long cutting edges are defined as, for example, a first long cutting edge 8 and a second long cutting edge 9 that are relatively longer than the first short cutting edge 6. Moreover, the opposing first short cutting edge 6 and the second short cutting edge 7 are not parallel to each other, and the other opposing first and second long cutting edges 8 and 9 are not parallel to each other. The upper surface 3 is defined as a rake face of each of the cutting edges 6, 7, 8, and 9, and each of the side faces 4 is defined as a relief face.

A first corner cutting edge 10 and a second corner edge 11 in one diagonal direction of the upper surface 3 are formed by the intersecting first short cutting edge 6 and the first long cutting edge 8, and the intersecting second short cutting edge 7 and the second long cutting edge 9, respectively, and each of the corner angles is set to 90 °or less, preferably, an acute angle, a corner angle of a third corner cutting edge 12 consisting of the first short cutting edge 6 and the second long cutting edge 9 in the other diagonal direction is set to 90 °, and preferably, an acute angle, and a corner angle of a fourth corner cutting edge 13 consisting of the second short cutting edge 7 and the first long cutting edge 8 is set to an obtuse angle. The comer angles of the first to third corner cutting edges 10, 11, and 12 may be either equal or unequal to one another.

The throwaway tip 1 of this embodiment is constructed as described above. An end mill 20 to which a plurality of throwaway tips 1 are mounted will now be described with reference to Figures 2 to 4.

At the distal end of a tool body 21 of the end mill 20, two concave grooves 22 and 23 are provided, which substantially oppose each other with respect to the rotation axis O defining the center of rotation and which are cut out into substantially a fan-shape in cross section. The concave grooves 22 and 23 are formed by cutting out the tool body 21 from a longitudinal outer peripheral surface in the middle thereof toward a distal end surface 21a, a tip-mounting seat 24a is formed on a surface of one concave groove 22 facing a rotation direction, a tip-mounting seat 24b is formed on a surface of the other concave groove 23 facing the rotation direction. To one tip-mounting seat 24a, the above-described throwaway tip 1 is mounted with the second long cutting edge 9 defined as a front cutting edge and projected from the distal end surface 21a of the tool body 21 toward the distal end, and this tip is referred to as a main tip 1A. To the other tip-mounting seat 24b, the throwaway tip 1 is mounted with the first short cutting edge 6 defined as a front cutting edge and projected from the distal end surface 21a of the tool body 21 toward the distal end, and this tip is referred to as a sub-tip 1B. A state in which the first and second long cutting edges 8 and 9 are arranged in a direction to intersect the rotation axis O, as in the main tip 1A, is referred to as a lateral arrangement, and a state in which the first and second long cutting edges 8 and 9 are arranged in a direction along the rotation axis O, as in the sub-tip 1B, is referred to as a vertical arrangement.

In the main tip 1A, since the third corner cutting edge 12 is provided outside the distal end, the first short cutting edge 6 is provided so that it projects along the outer peripheral surface of the tool body 21 to be substantially in parallel with the rotation axis O, and is defined as an outer peripheral cutting edge, the second long cutting edge 9 projecting from the distal end surface 21a of the tool body 21 toward the distal end is inclined at an angleαα (for examole, αα = 5°) with respect to the line perpendicular to the rotation axis O so that it gradually comes close to the base end side from the outer periphery toward the rotation axis O, the second comer cutting edge 11 defining the acute angle of the other end of the second long cutting edge 9 is located on the opposite side of the rotation axis O, and the second short cutting edge 7 intersects the rotation axis O.

In the sub-tip 1B, since the first corner edge 10 is provided outside the distal end, the first long cutting edge 8 is provided so that it projects along the outer peripheral surface of the tool body 21 to be substantially in parallel with the rotation axis O and is defined as an outer peripheral cutting edge, the first short cutting edge 6 projecting from the distal end face 21 a of the tool body 21 toward the distal end is inclined at an angle ββ (for example, ββ = 7 to 10°,ββ = αα is acceptable) so that it gradually comes close to the base end side from the outer periphery toward the rotation axis O, and the third cutting edge 13 of the other end is separated away from the rotation axis O.

For this reason, the second short cutting edge 7, the second long cutting edge 9, and side faces 4 and 4 thereof located inside both tips 1A and 1B are gradually inclined outward from the distal end toward the base end in the direction away from the rotation axis O.

The main tip 1A and the sub-tip 1B are mounted in such a manner that the first axial rake angle of the first short cutting edge 6 and the first long cutting edge 8 defining each of the outer peripheral cutting edges is a positive angle, as shown in Figure 4 (only the first long cutting edge 8 is shown in Figure 5). As shown in Figure 2, the second long cutting edge 9 defining the front cutting edge of the main tip 1A is located on the radial line around the rotation axis O, a radial rake angle is set to 0 °, the first short cutting edge 6 defining the front cutting edge of the sub-tip 1B is located above the center of rotation of the tool body, and a radial rake angle is set to a negative angle.

Since the throwaway tip 1 and the end mill 20 according to this embodiment are constructed as described above, if a material to be cut is cut by rotating the tool body 21 around the rotation axis O, the corner cutting edges 12 and 10 on the outer periphery of the second long cutting edge 9 and the first cutting edge 6 projecting at the distal end of the tool body 21 bite into the material to be cut . Since this area is rotated at high speed as compared with an area near the rotation axis O, cutting resistance during biting is low and a cutting operation can be performed without causing chipping. Furthermore, by feeding the tool body 21 to an end of the rotation axis O, a rotary cutting operation can be performed like a drill with the second long cutting edge 9 and the first short cutting edge 6 whose rotation paths overlap.

By feeding the tool body 21 in the lateral direction, outer peripheral cutting can be performed with the first short cutting edge 6 and the first long cutting edge 8 defining the outer peripheral cutting edges, and a finish cutting operation can be performed with the corner cutting edges 12 and 10 of the second long cutting edge 9 and the first short cutting edge 6. Alternatively, a shoulder-cutting operation or a groove-processing operation can be performed with the first cutting edge 6 and the long cutting edge 8 defining the outer peripheral cutting edges.

Even if the cutting edges of one of the tips 1A and I B are chipped or worn, the same throwaway tips 1 may be replaced and mounted.

As described above, according to this embodiment, a plurality of the same tips 1 can be mounted to the tool body with different mounting angles and in different postures so that the second long cutting edge 9 and the first short cutting edge 6 can be arranged as front cutting edges, and the short cutting edge 6 and the long cutting edge 8 can be arranged as outer peripheral cutting edges, and only one type of replacement tip need be stored. Therefore, the cost of manufacturing the tips and the running costs of the cutting tool can be reduced.

Moreover, since the comer angle of at least the first and third corner cutting edges 10 and 12 on both sides of the first short cutting edge 6 is set to 90°or less, for example, an acute angle, the corner cutting edges 10 and 12 at an outer-peripheral-side of the distal end of the main tip 1A and the sub-tip 1B can be provided in a state of being projected greatest, and since the corner cutting edges 10 and 12 can be arranged as two cutting edges whose rotation paths overlaps with restricting the chipping of the corner cutting edges 10 and 12, the cutting efficiency is high. In addition, the side faces 4 inside the main tip 1A and the sub-tip 1B are gradually inclined from the distal end of the tool body 21 toward the base end in the direction away from the rotation axis O. Therefore, the thickness of a center portion 26 of the distal end of the tool body 21 sandwiched by the tips 1A and 1B can be increased and ensured, and the rigidity of the tool body 21 can be secured.

A second embodiment of the present invention will now be described with reference to Figure 5 to 7. The same or similar portions to those of the above-described first embodiment are indicated by the same reference numerals and a description thereof will be omitted. Figure 5 is a side view of a throwaway-type end mill according to the second embodiment.

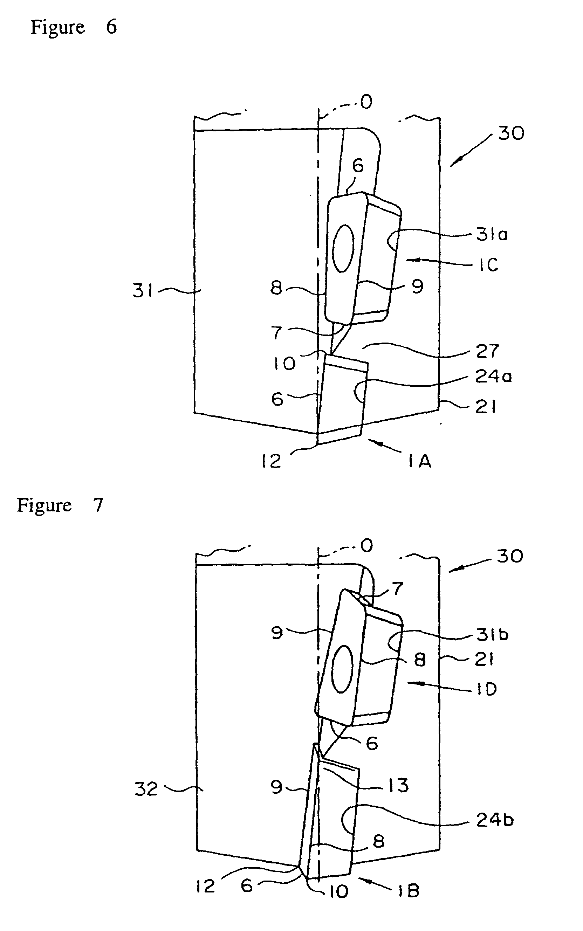

Figure 6 is a side view of the end mill shown in Figure 5, as viewed from the direction C, and Figure 7 is a side view of the same, as viewed from the direction D. A throwaway-type end mill 30 shown in Figures 5 to 7 according to the second embodiment has the same construction as the throwaway-type end mill 20 according to the above-described first embodiment. At the distal end of a tool body 21, two concave grooves 31 and 32 are provided, which substantially oppose each other with respect to the rotation axis O defining the center of rotation and which are cut out into substantially a fan-shape in cross section. The concave grooves 31 and 32 have tip-mounting seats 24a and 24b formed on the distal end surfaces thereof facing a rotation direction, and a main tip 1A and a sub-tip 1B are attached thereto, respectively. The arrangement of the tips 1A and 1B is the same as the above-described first embodiment.

In one concave grooves 31, a tip-mounting seat 31a is further formed at the base end side of the main tip 1A, and the above-described throwaway tip 1 is attached thereto as a third tip 1C. The third tip 1C is provided in such a manner that a second long cutting edge 9 is projected as an outer peripheral cutting edge from the outer peripheral surface of the tool body21 to the outside in the radial direction so as to be located substantially in parallel with the rotation axis O, and a second short cutting edge 7 is directed to the distal end.

An axial rake angle of the second long cutting edge 9 is set to a positive angle, as shown in Figure 6, and the second long cutting edge 9 is shifted toward the base end from a first long cutting edge 8 defining an outer peripheral cutting edge of the sub-tip 1B that is located on the opposite position across the rotation axis O of the tool body 21 so that its rotation path overlaps the rotation path of the first long cutting edge 8. Moreover, the first short cutting edge 6 of the main tip 1A and the second long cutting edge 9 of the third tip 1 C each defining an outer peripheral cutting edge are twisted rearward in the rotation direction of the tool body 21 from the distal end toward the base end.

In the other concave groove 32, a tip-mounting seat 3 1b is further formed at the base end side of the sub-tip 1B, and the above-described throwaway tip 1 is attached thereto as a fourth tip 1D. The fourth tip 1D is provided in such a manner that the first long cutting edge 8 is projected as an outer peripheral cutting edge from the outer peripheral surface of the tool body 21 to the outside in the radial direction so as to be located substantially in parallel with the rotation axis O, and the first short cutting edge 6 is directed to the distal end.

An axial rake angle of the first long cutting edge 8 is set to a positive angle, as shown in Figure 7, and the first long cutting edge 8 is shifted toward the base end from a second long cutting edge 9 defining an outer peripheral cutting edge of the third 1C that is located on the opposite position across the rotation axis O of the tool body 21 so that its rotation path overlaps the rotation path of the second long cutting edge 9. Moreover, the first long cutting edge 8 of the sub-tip 1B and the first long cutting edge 8 of the fourth tip 1D each defining an outer peripheral cutting edge are twisted rearward in the rotation direction of the tool body 21 from the distal end toward the base end.

According to the end mill 30 of the second embodiment, the main tip 1A located at the distal end of the tool body 21 is arranged in the vertical direction so that the first short cutting edge 6 defines an outer cutting edge, and the sub-tip 1B is arranged in the lateral direction so that the first long cutting edge 8 defines an outer peripheral cutting edge. Therefore, the third tip 1C and the fourth tip 1D can be arranged at the base end side of the main tip 1A and the sub-tip 1B so that the rotation paths of the outer peripheral cutting edges continue, and a deep hole processing can be performed. Moreover, this can be achieved by using the tips 1A, 1B, 1C and 1D that are the same as one another.

The number of the tips 1 arranged is not necessarily four, and three or more than five tips may be arranged. Furthermore, in accordance with the arrangement of the main tip 1A in relation to the third tip 1C, since the first long cutting edge 8 located at the base end side of the main tip 1A is gradually inclined to the distal end from the outer periphery of the tool body 21 toward the rotation axis O, and the second short cutting edge 7 of the third tip 1C is inclined to the base end from the outer periphery toward the rotation axis O, the thickness of an outer peripheral portion 27 between the tips 1A and 1C can be increased from the outer periphery toward the inside. Therefore, the strength of the tool body 21 can be secured together with the strength of a center portion 26 of the distal end thereof.

In Figure 5 to 7, one or both of the third tip 1C may be arranged in the lateral direction, and the first short cutting edge 6 and/or the second short cutting edge 7 may be defined as outer peripheral edges. Alternatively, the third tip 1C and the fourth tip 1D may be turned upside down and arranged in the vertical direction, and the first long cutting edge 8 and the second long cutting edge 9 may be defined as outer peripheral cutting edges. In short, the tips may be arranged either in the vertical direction or in the lateral direction as long as they can be arranged so that the rotation paths of the peripheral cutting edges overlap.

Another example of the throwaway tip of the present invention will now be described as a third embodiment. The same or similar portions to those of the throwaway tip 1 according to the first embodiment will be described using the same reference numerals.

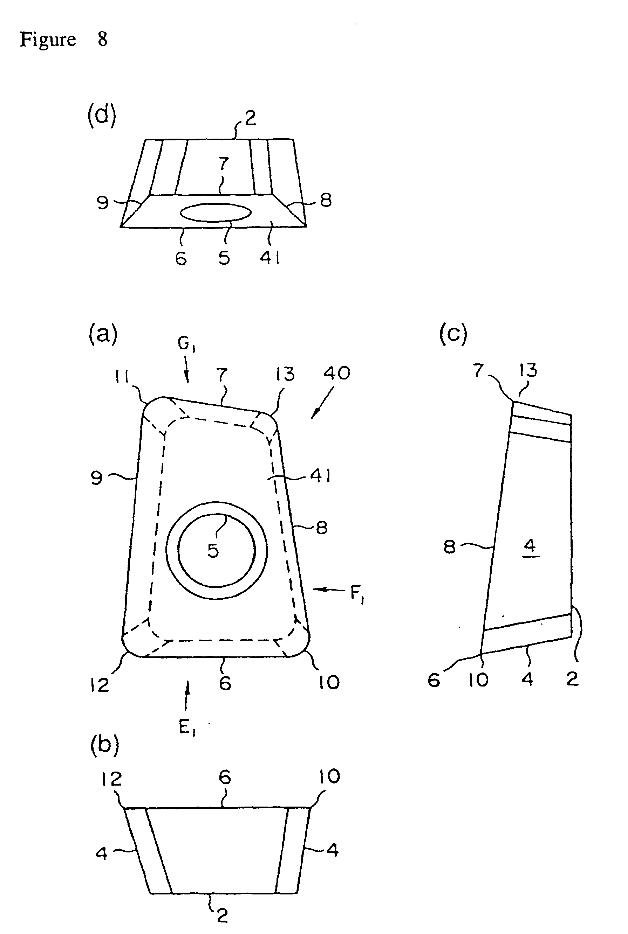

Figure 8 (a) is a plan view of a throwaway tip according to this embodiment, Figure 8 (b) is a side view of the throwaway tip shown in Figure 8 (a), as seen from the direction E. Figure 8 (c) is a side view of the same , as seen from the direction F, and Figure 8 (d) is a side view of the same, as seen from the direction G.

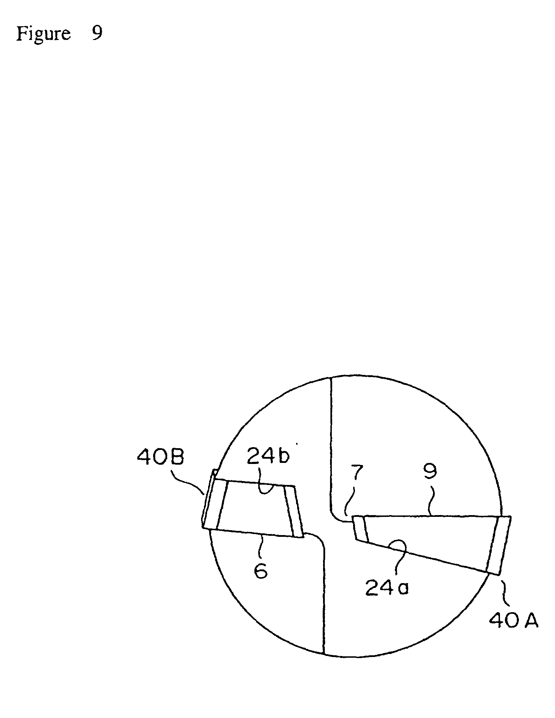

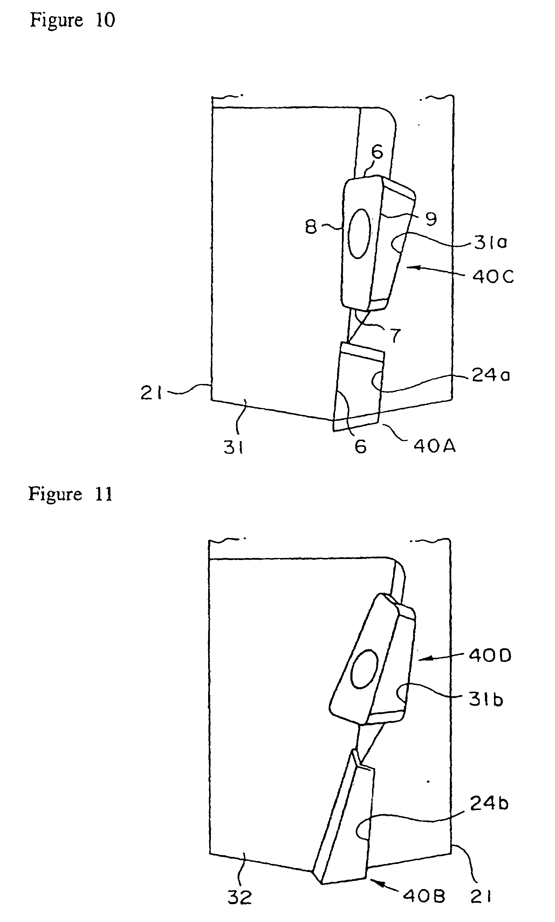

A throwaway tip (hereinafter, it may be referred to as tip) 40 shown in Figure 8 according to the third embodiment is formed in substantially the shape of a rectangular plate, an upper surface 41 which opposes a lower surface 2 defining a seating surface is formed in a planar shape which is inclined from a first short cutting edge 6 toward an opposing second short cutting edge 7 so that the distance between the upper surface 41 and the lower surface 2 is gradually shortened, and therefore, a first long cutting edge 8 and a second long cutting edge 9 are straight-lined cutting edges inclined from the first short cutting edge 6 toward the second short cutting edge 7. Therefore, the distance between the first short cutting edge 7 and the lower surface 2 is formed shortest. An insertion hole 5 passing through the upper and lower surfaces 41 and 2 is formed in a direction to intersect nearly perpendicularly to the lower surface 2. Alternatively, the insertion hole 5 may be made to intersect perpendicularly to the upper surface 41. In mounting such a tip 40 to the above-described end mill 30 (20) instead of the tip 1, if the tip 40 is mounted so that an radial rake angle or an axial rake angle of each cutting edge is not changed, the thickness of tip-mounting seats 24a, 24b, 31a, and 32a formed on the back of the tip can be increased and the strength of a tool body 21 can be increased. In a main tip 40A shown in Figure 9 and a third tip 40C shown in Figure 10, the thickness of the tip-mounting seats 24a and 31 a on the side of the second short cutting edge 7 can be increased. When the tip 40 or 1 is mounted to the tip-mounting seat without changing the posture of the seating surface (lower surface 2), in a sub-tip 40B and a fourth tip 40D in which a first short cutting edge 6 is located at the distal end, as shown in Figure 11, an axial rake angle of a first long cutting edge 8 serving as an peripheral cutting edge can be increased, and the cutting quality in the outer peripheral cutting can be improved.

In mounting the tip 1 according to the first embodiment and the tip 40 according to the third embodiment to an end mill, the arrangement of the tips 1 and 40 is not limited to one form in which the main tips 1A and 40A are arranged in the lateral direction at the distal end of the tool body 21 and the sub-tips 1B and 40B are arranged in the vertical direction, as shown in the end mill 20 and 30 of the first and second embodiments, and other suitable arrangement forms may be adopted.

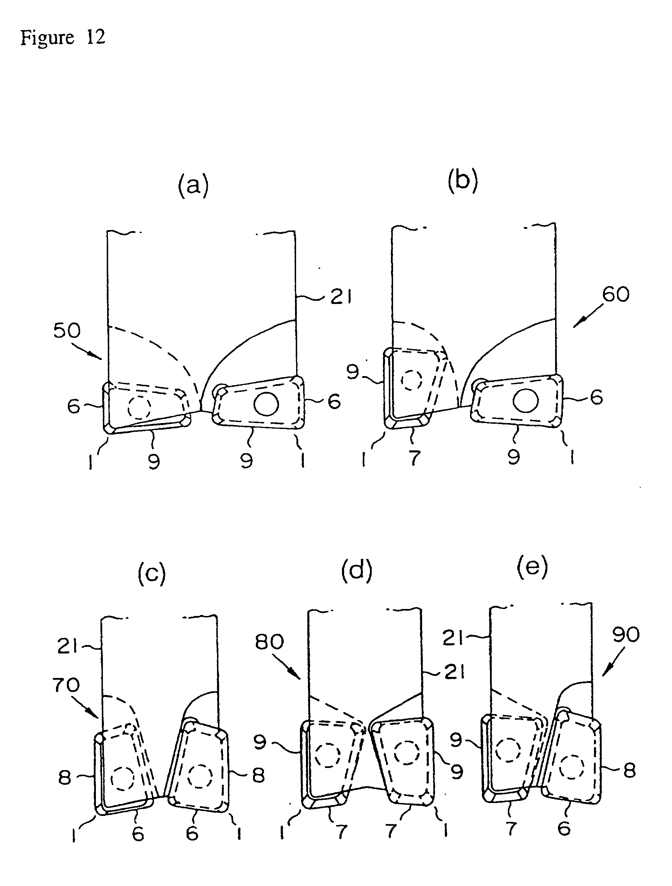

For example, in Figure 12 (a), if two tips 1 and 1 (40 and 40) are arranged in the lateral direction to define first short cutting edges 6 and 6 as outer peripheral cutting edges and define second long cutting edges 9 and 9 as front cutting edges, this arrangement form can be adopted to a tool body 21 having a large outer diameter. An end mill 50 can be applied to a large-diameter-hole drilling operation. In an end mill 60 shown in Figure 12 (b), one tip 1 is arranged in the lateral direction to define a first short cutting edge 6 as an outer peripheral cutting edge and define a second long cutting edge 9 as a front cutting edge overlapping the rotation axis O, and the other tip is arranged in the vertical direction to define a second short cutting edge 7 as a front cutting edge and define a second long cutting edge 9 as an outer peripheral cutting edge. In an end mill 70 shown in Figure 12 (c), two tips 1 and 1 (40 and 40) are arranged in the vertical direction to define each first short cutting edge 6 as a front cutting edge and define each first long cutting edge 8 as an outer peripheral cutting edge.

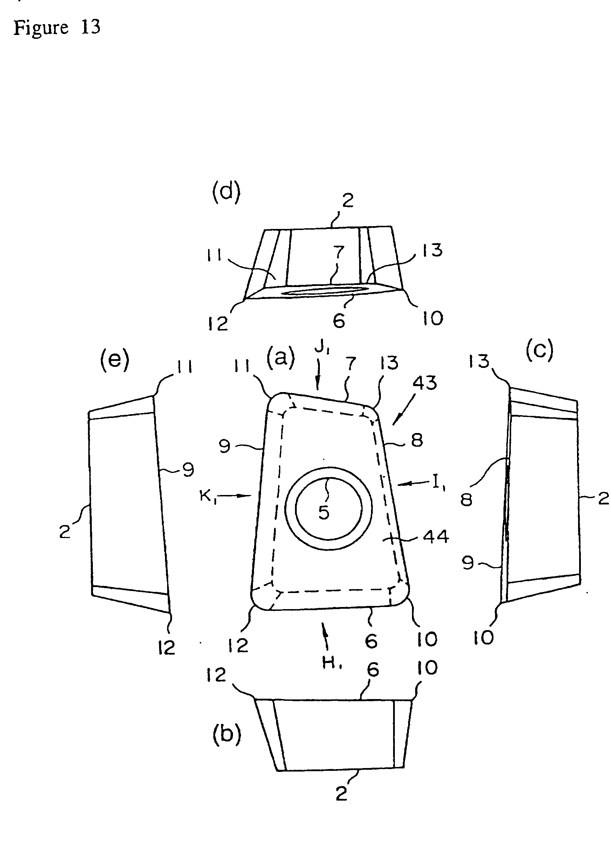

In an end mill 80 shown in Figure 12 (d) two tips 1 and 1 (40 and 40) are arranged in the vertical direction to define each second short cutting edge 7 as a front cutting edge and define each second long cutting edge 9 as an outer peripheral cutting edge. In an end mill 90 shown in Figure 12 (e), both two tips 1 and 1 (40 and 40) are arranged in the vertical direction to define a first short cutting edge 6 of one tip 1 as a front cutting edge, define a first long cutting edge 8 as an outer peripheral cutting edge, define a second short cutting edge 7 of the other tip 1 as a front cutting edge, and define a second long cutting edge 9 as an outer peripheral cutting edge. In this case, in the end mills 50, 70, 80, 90, a portion left uncut (a core remainder) is produced between the two tips 1 and 1 during cutting, but the portion can be picked up by the end mills if the thickness of the core remainder of a material to be cut is small. If the end mills are fed in the lateral direction, the portion left uncut can be cut off. Since the second long cutting edge 9 of one tip 40 overlaps the rotation axis O in the end mill 60, no core remainder is produced.
A throwaway tip may have a construction shown in Figure 13 as a modification of the tip 40 according to the third embodiment. Figure 13(a) is a plan view of a throwaway tip according to this modification, Figure 13(b) is a side view of the throwaway tip shown in Figure 13(a), as seen from the direction H 1, Figure 13(c) is a side view of the same, as seen from the direction I 1, Figure 13(d) is a side view of the same, as viewed from the direction J 1, and Figure 13(e) is a side view of the same, as viewed from the direction K 1.

A throwaway tip 43 according to a modification shown in Figure 13 is formed in substantially the shape of a rectangular plate, an upper surface 44 which opposes a lower surface 2 defining a seat surface is formed into a twisted surface, and therefore, a first short cutting edge 9, a second short cutting edge 7, a first long cutting edge 8, and a second long cutting edge 9 are linear-shaped cutting edges inclined at an arbitrary angle so that the distance between the lower surface 2 and these cutting edges gradually changes from one end of each of the corner cutting edges toward the other end. An insertion hole 5 passing through the upper and lower surfaces 44 and 2 is formed in a direction to intersect nearly perpendicularly to the lower surface 2. The insertion hole may be made to intersect perpendicularly to the upper surface 44.

The adoption of such a construction can set a suitable radial rake angle and an axial rake angle according to the mounting position or the posture of each cutting edge.

Breaker grooves may be formed in the upper surfaces 3, 41, 44.

The front cutting edges of the two tips 1 and 1 (40 and 40, 43 and 43) may be provided at a position above the center of rotation of the tool body or at a position below the center of rotation of the tool body.

In the tips 1, 40, 44 of the third embodiments, the corner angles of the first and third corner cutting edges 10, 11, and 12 may be either equal or unequal to one another.

While the long cutting edges 8 and 9 and the short cutting edges 6 and 7 in the throwaway tips of the above-described first and third embodiments and the modification are straight-lined cutting edges, they may be instead convexly curved cutting edges or concavely curved cutting edges. In this case, the upper surfaces 41 and 44 may be convex surfaces or concave surfaces.

The throwaway tip according to the present invention may be mounted to various types of cutting tools, such as other types of rolling tools or turning tools without being limited to the end mills 30, 50, 60, 70, 80, and 90.

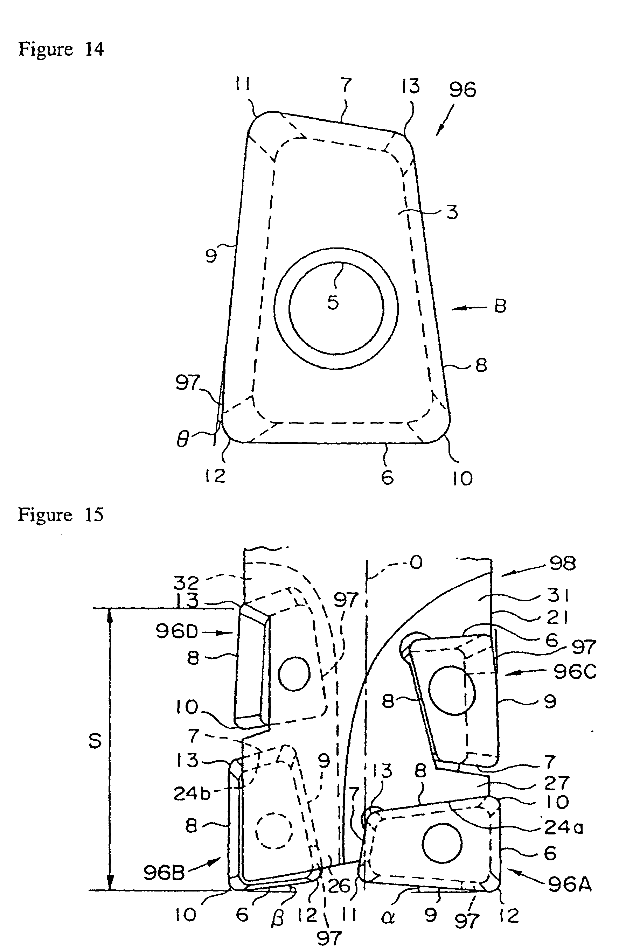

[ 4th embodiment ] The 4 th embodiment in this invention is explained in Figure 14 and Figure 15. The explanation is omitted using the same marks in a same or similar portions to those of above mentioned 2nd embodiment. Figure 14 is a plane view of the throwaway tip according to the 4th embodiment, Figure 15 is side view of an end mill of throwaway type according to the 4th embodiment. Throwaway tip 96 shown in Figure 14 is the one that the sub-cutting tooth 97 is formed with the inclination to the other portions so that it may retreat inside the field 3 of 1 as it approaches the third comer tooth 12 in the end portion including the third comer tooth 12 of the second long tooth 9, in a throwaway tip 1 according to 1 st embodiment shown in Figure 1.

The angleθ (for example θ=5°) inclination of the sub-cutting tooth 97 is done to other portions of the second long tooth 9.

The throwaway type end mill 98 according to the 4 th embodiment is equipped with the same construction as the throwaway type end mill 30 according to above mentioned the 2 nd embodiment, the tip 96 is replaced with a tip 1. In a tip part of the main part 21 of a tool. Two concave grooves 31, 32 which cut and lacked in the cross-sectional practically sector are formed, almost opposite to rotation axis O which makes the rotation center. In a tip side of each concave grooves 31, 32, the tip attachment seats 24a, 24b are formed in the field where each concave grooves 31, 32 turn to the rotation direction, and it is equipped with main tip 96A and sub-tip 96B respectively. The arrangement construction of these tips 96A, 96B is the same as the arrangement construction of the tips 1A and 1 B in the second embodiment mentioned above. And in above mentioned arrangement construction, the sub-cutting tooth 97 formed in the second long tooth 9 of tip 96A is projected to the tip side of the main part 21 of a tool rather than other portions of the second long tooth 9. Moreover, the second long tooth 9 of a tip 96B is located in the inner circumference side of the main part 21 of a tool, and don't act on cutting. And the tip attachment seat 31a is further formed in the base edge side of main tip 96A in the other concave groove 31, and the throwaway tip 96 mentioned above is equipped as the third tip 96C. This third tip 96C is projected to the out side of radius direction from the perimeter face of the main part 21 of the tool as the perimeter tooth of the second long tooth 9, and is located almost parallel to the rotation axis O, and is set toward the second short tooth 7 in a tip side. In this attachment construction, the sub-cutting tooth 97 formed in a third tip 96C has escaped to the inner circumference side of a main part 21 of a tool to other portions of the second long tooth 9. Next, tip attachment seat 31b is also formed in a base side of sub-tip 96B in the other concave groove 32, and the throwaway tip 96 mentioned above is set as the fourth tip 96D. This fourth tip 96D is projected to outer side of radius direction from the main part 21 of a tool as the perimeter tooth of the first long tooth 8, and is located almost parallel to the rotation axis O, and is set toward the first short tooth 6 in the tip side.

In this construction, the second long tooth 9 of a tip 96D is located in the inner circumference side of a main part 21 of a tool, don't act on cutting. According to end mill 98 by this fourth embodiment, the sub-cutting tooth 97 of a tip 96A can be used in a finish cutting in a throwaway tip 96, and the sub-cutting tooth 97 in a tip 96B, 96C, 96D don't act on a cutting of work material. Thus, in end mill 98, since the advance of the wear of sub cutting tooth 97 is prevented except the use of the second long tooth 9 as front face tooth, the throwaway tip 96 can secure the sharpness of the sub-cutting tooth 97, and when it uses the sub-cutting tooth 97 as a front face tooth and performs finish machining of a work material, it can aquire a good finished surface. Moreover, in tip 96D located in the most base edge side of a main part 21 of a tool, since the first long tooth 8 which is not formed sub-cutting tooth 97 as a perimeter tooth is used, it can be possible to hold the maximum cutting of depth S of throwaway type cutting tool, forming sub-cutting tooth 97 in the second long tooth 9.

In addition, the arrangement number of sheets of a tip 96 is not necessarily four sheets, three sheets or more than five sheets may be set.

Moreover, in the fourth embodiment mentioned above, although the throwaway tip 96 shall consist of having formed the sub-cutting tooth 97 in the second long tooth 9 in a throwaway tip 1 by the first embodiment shown in Figure 1, not only limiting in this, it may consist of forming the sub-cutting tooth 97 in the second long tooth 9 in a throwaway tip 40 or 43 . Moreover, you may equip not only end mill 98 but also other end mill with the throwaway tip 96.

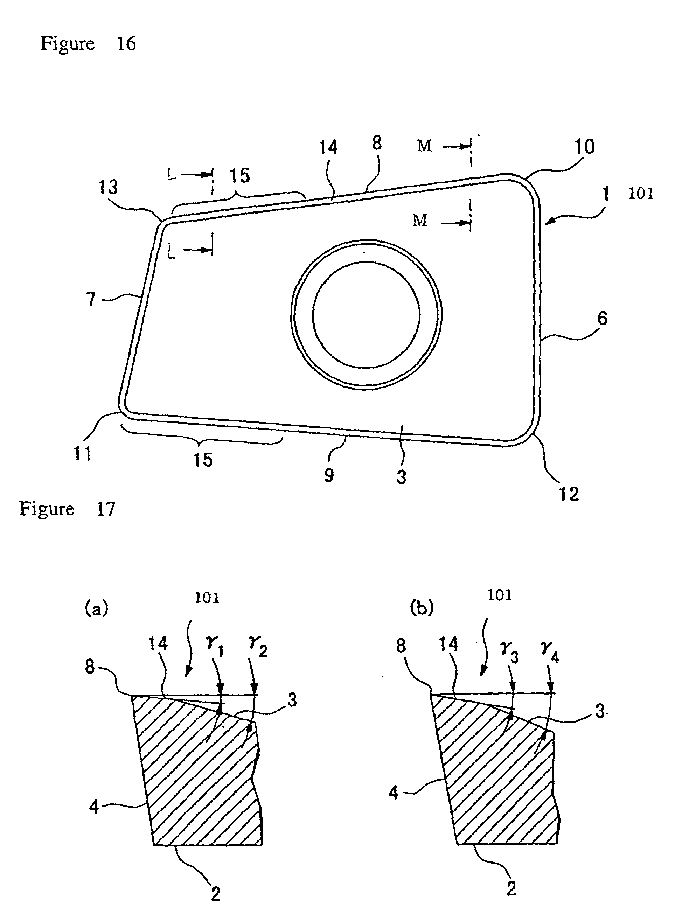

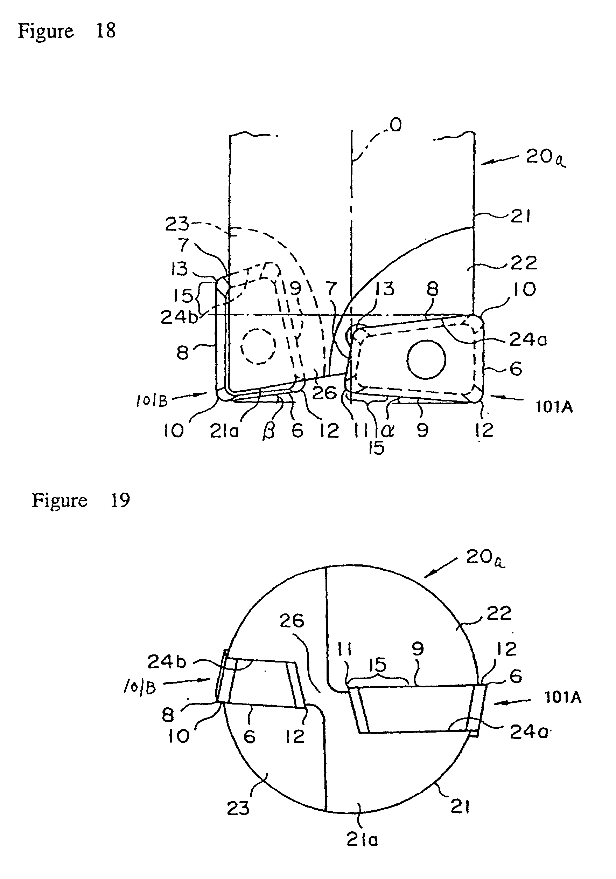

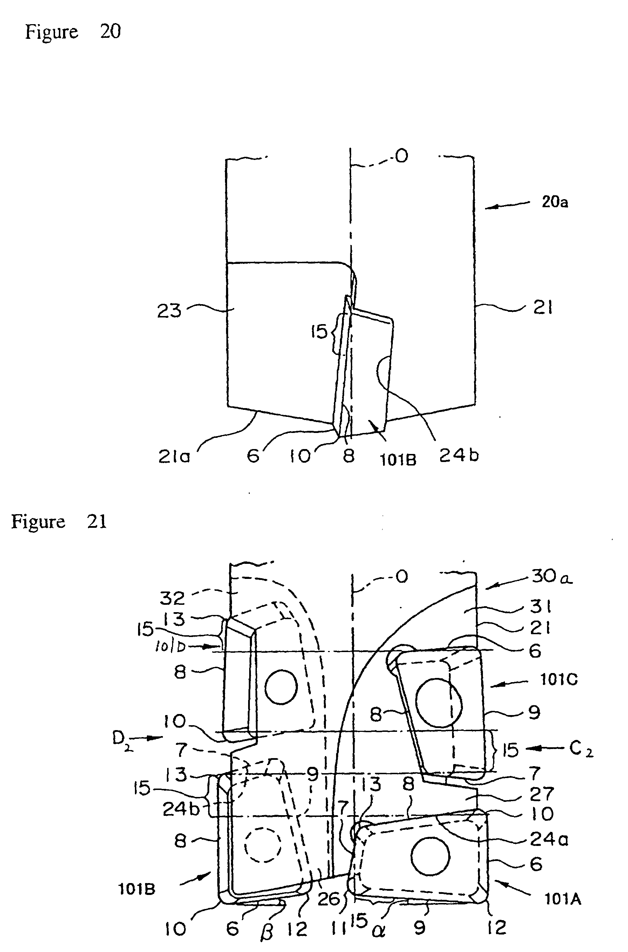

[ 5 th embodiment] although the throwaway tip and throwaway type end mill by the 5 th embodiment of this invention are explained with the reference to a drawings, the explanation is omitted by using the same marks in a portion of the same or similar parts to each embodiment mentioned above. Figure 16 and Figure 17 show the throwaway tip by the 5 th embodiment, and Figure 18 to Figure 20 show the throwaway type end mill by the 5 th embodiment. Figure 16 is a plan view of a throwaway tip, and Figure 17 is a cross-sectional view of each part of the throwaway tip shown in Figure 16. (a) is L-L line cross-sectional view in Figure 16, (b) is M-M line cross-sectional view in Figure 16. Figure 18 is a principal part side view of end mill which equipped with the throwaway tip shown in Figure 16, and Figure 19 is a front view of end mill shown in Figure 18, Figure 20 a principal part side view which looked at the end mill shown in Figure 18 from the perimeter tooth side. The throwaway tip (it may be hereafter called a tip) 101 by the embodiment shown in Figure 16 and Figure 17 is made into the shape of an approximately square plate like by which the arrangement and form of the under face 2, upper face, the four side face 4, insert hole 5 are made almost the same as the throwaway tip 1 by 1st embodiment. Moreover, in four edge side on a upper face 3 of a tip 101, a each pair of edge side which opposite each other, is made a short tooth and long tooth same as tip 1, one side of the cutting tooth of two tooth which constitutes a short tooth is taken as the first short tooth 6 which it is comparatively long, the other is made the second short tooth 7 which is comparatively short. The two side which opposite to the other which constitute the long tooth is made the first long tooth 8 and the second long tooth 9 which is longer than the first short tooth 6. And the first short tooth 6 and the second short tooth 7 which opposite each other is made non-parallel, and the first long tooth 8 and the second long tooth 9 which opposite each other is also made non-parallel. The upper face 3 is made into the rake face of each cutting tooth 6, 7, 8, 9, and the side face is made into the flank face. Moreover, in upper face 3, the land parts 14 which stands in a row in each cutting tooth is formed all over the circumferences. And, the first corner tooth 10 of one direction of a diagonal of the upper face 3 and the second corner tooth 11 is formed by crossing of the first short tooth 6 and the first long tooth 8, the second short tooth 7 and the second long tooth 9 respectively, and the third comer tooth 12 which consist of the first short tooth 6 and the second long tooth 9 of the another diagonal direction and the fourth corner tooth 13 which consist of the second short tooth 7 and the first long tooth 8 is formed. The comer angle of each comer tooth is made as the almost same corner angle as the tip 1 by the 1 st embodiment respectively. In this throwaway tip 101, the part of fourth comer tooth 13 slippage of the first long tooth 8 and the part of the second corner tooth 11 slippage of the second long tooth 9, the strengthening part 15 is formed respectively. As shown in a sectional view of Figure 17(a), the strengthening part 15 formed in the first long tooth 8 is constructed as that the rake γ1 (the first rake angle) of a land part 14 in a portion of the fourth corner tooth 13 slippage in the first long tooth 8 and a rake angleγ2 (the second rake angle) on a upper face 3 is made into a small angle than a rake angleγ3 of a land part 14 in other part of the first long tooth8 and a rake angleγ4 on a upper face 3. (refer to the Figure 17(b )). Similarly, in the second long tooth 9, the strengthening part 15 is constructed as that the rake angleγ1 of a land part 14 in a part of the second corner tooth 11 slippage and a rake angleγ2 of a upper face 3 is made into a small angle than the rake angleγ3 of a land part 14 in other part of the second long tooth 9 and a rake angleγ4 on a upper face 3. The strengthening part 15 makes an rake angle into an smaller angle than other parts, enlarges the thickness of the tooth and raises the strength of the cutting tooth in this portion.

Here, in this first long tooth 8 and the second long tooth 9, the first and the second rake angle in strengthened parts or parts other than a strengthened parts is good also as the same angle, and also let it be an angle different, respectively. The throwaway tip 101 by this embodiment is constituted as mentioned above, the end mill 20a which equipped with two or more of this throwaway tip 101 is explained by Figure 18 to Figure 20. The end mill 20a consists of the almost same composition as end mill 20 by the first embodiment, the throwaway tip 101 by this embodiment is equipped on tip attachment seat 24a ,24b formed in a tip part of a main part 21 of a tool. And, the throwaway tip 101 mentioned above is equipped at one tip attachment seat 24 a of the main part 21 of a tool.

The second long tooth 9 is projected to a tip side from the tip face 21a of a main part 21 of a tool as the front face.This tip is as 101A. In other tip attachment seat 24b, the throwaway tip 101 is equipped projecting the first short tooth 6 from the tip face 21 a of a main part 21 of a tool as the front face tooth. This is as sub- tip 101B. (the arrangement of the main tip 101A and sub-tip 101B in end mill 20a by this embodiment is almost made same as the main tip 1A and sub-tip 1B in end mill 20 by the first embodiment shown in Figure 18 to Figure 20.)

With such arrangement construction, the strengthening part 15 of the second long tooth 9 which is a front face tooth of a main tip 101 A is located in a circumference side in a front face tooth. Moreover, the strengthening part 15 of the first long tooth 8 which is perimeter tooth of sub-tip 101B is located in a base edge side of a tool in a perimeter tooth.

Since the throwaway tip 101 and end mill 20a in this embodiment is constructed as mentioned above, it can be possible to cut the work material like the throwaway tip 1 and end mill 20 by the first embodiment.

And, what is necessary to exchange the same throwaway tip 101 and just equip, even if the cutting tooth of one of the tips 101A and 101B is suffered a loss or worn out. Here, in conventional end mill, it is formed the overlapping part of rotation locus of perimeter tooth of two tips (the part becoming two number of tooth) and not overlapping part (the part becoming single tooth) in perimeter tooth of each throwaway tip when a main part of tool is rotated in a rotating axis line. And compared with the portion used as a two sheet edge, it is easy to damage the portion which serves as a single edge in a cutting tooth in response to strong cutting resistance at the time of cutting of work material.

In end mill 20a of this embodiment, in each cutting work, the first long tooth 8 which is perimeter tooth of sub-tip 101B is not overlap the locus of the first short tooth 6 which is perimeter tooth of main tip 101A, this portion will cut the work material as a single tooth.

And in portions other than this, although the perimeter tooth of both tips will cut the work materials as a two sheet edge, in these both tips, the strengthening part 15 is formed in a part of single edge, and is secured the strength of the cutting tooth of this portion. And in both tips, the selection of the shape of cutting tooth is not necessary in other portion, and it can be possible to decrease the drop of the sharpness by taking the shape of cutting tooth which the sharpness of cutting tooth is thought as important in this portion. According to throwaway tip 101 and end mill 20a which is constituted as this, in perimeter tooth of each tip 101, the strengthening part 15 is set in a portion of single tooth, as the results, the strength of cutting tooth is secured, and it is possible to do the shape of cutting tooth where the sharpness was thought as important in a portion of two cutting tooth, you may be possible to secure the strength of cutting tooth and to decrease the drop of the sharpness in a throwaway tip.

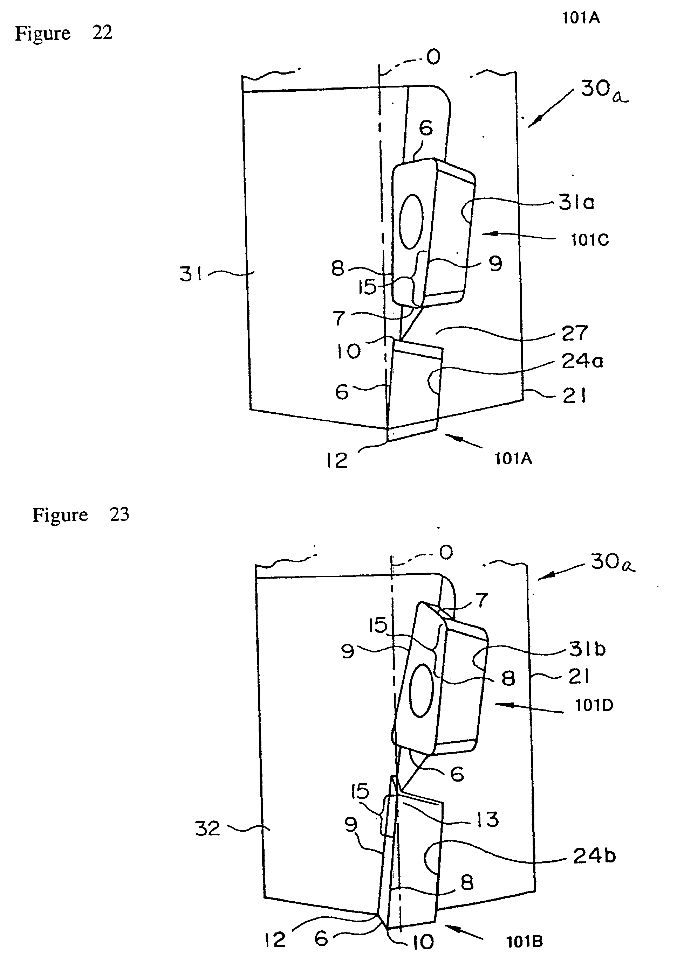

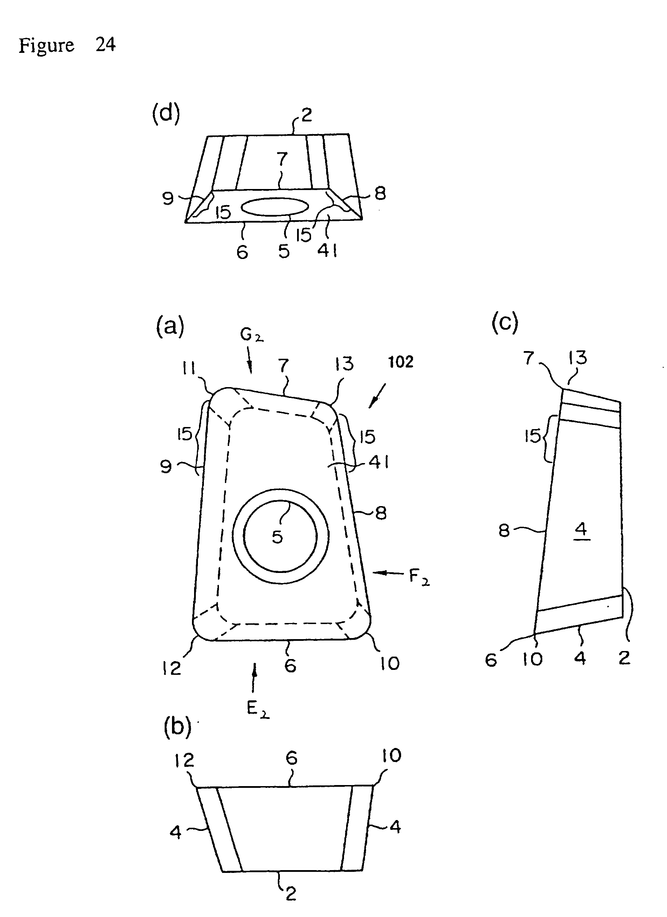

[ the 6 th embodiment] Although the 6 th embodiment of this invention is explained by Figure 21 to Figure 23, the explanation is omitted using the same marks in a same or similar portion with each embodiments mentioned above. Figure 21 is a side view of an throwaway type end mill by the 6 th embodiment, Figure 22 is a C2 direction side view of the end mill shown in Figure 21, Figure 23 is also C2 direction side views.

The throwaway type end mill 30a by the 6 th embodiment shown in Figure 21 to Figure 23 is equipped with the same construction as throwaway type end mill 20a by the 5 th embodiment, and in a tip portion of a main part 21 of a tool, two concave groove 31, 32 which the cross section is cut in approximately fan shape opposite to an rotation axis O which makes the rotation center. The tip attachment seat 24a, 24b are formed in the field where turn to the rotation direction in a tip side of each concave groove 31 and 32, the main tip 101A, sub-tip 101B is equipped respectively. The arrangement and construction of these tips 101A, 101B is the same with the 5 th embodiment mentioned above. And the tip attachment seat 31 a is further formed in the base edge side of a main tip 101A in the other concave groove, the throwaway tip 101 mentioned above is equipped as the third tip101C. This third tip 101C is projected to the out side of radius direction from perimeter face of a main part 21 of a tool as the perimeter tooth of the second long tooth 9 and is located in parallel to the rotation axis O, and is located toward the second short tooth 7 in a tip side. With this arrangement composition, the strengthening portion 15 of the second long tooth 9 which is the perimeter tooth of the third tip 101C is located in a tip side of a tool in a perimeter tooth. Moreover, this second long tooth 9 is located in shifting to the base edge side from the first long tooth 8 as that it overlaps the rotation locus of the first long tooth 8 which makes the perimeter tooth of sub-tip 101B located opposite to the rotating axis O of a main part 21 of a tool. Next, in other concave groove, the attachment seat 31b is further formed in a base edge side of a sub-tip 101B, the throwaway tip 101 mentioned above is equipped as the fourth tip 101D. This fourth tip 101D is projected to out side of radius direction from perimeter face of a main part 21 of a tool as the perimeter tooth of the first long tooth 8, and is located in a parallel to the rotating axis O, and is arranged turning the short tooth 6 to the tip side. With this arrangement composition, the strengthening portion 15 of the first long tooth 8 which is the perimeter tooth of the fourth tip 101D is located in a base edge side of a tool in a perimeter tooth. Moreover, this first long tooth 8 is arranged shifting in a base edge side from this second long tooth 9 which overlaps with the rotating axis of the second long tooth 9 which makes the perimeter tooth of the third tip 101C located opposite to the rotating axis O of a main part 21 of a tool. Here, the arrangement of the tip 101A, 101B, 101C, 101D in end mill 30a by this embodiment is made almost the same as that of 101A, 101B, 101C, 101D in end mill 30 in the second embodiment .

In addition, the arrangement number of sheets of a tip 101 is not necessarily four sheets, you may arrange three or five or more sheets.

In case that the this end mill 30a is used in each cutting, the base edge portion of tool of the first long tooth 8 which makes perimeter tooth in a sub-tip 101B and the tip portion of tool of the second long tooth 9 which makes perimeter tooth in a third tip 101C and base edge portion of a tool of the first long tooth 8 which makes perimeter tooth in a fourth tip 101D are not overlap with the locus of perimeter of other tip respectively, and this portion will cut work material as a single tooth respectively.

And in perimeter tooth of each tip, the other portion will cut the work material as a two sheet tooth.

Here, in each tip, the strengthening portion is formed in the portion used as single tooth, and the strength of this portion is secured. And since other portions do not need to add restriction to cutting tooth shape in each tip, a fall of sharpness can be reduced as cutting tooth shape where sharpness was thought as important.

According to the end mill 30a by this 6 th embodiment, the drop of the sharpness can be reduced, securing the the strength of cutting tooth of a throwaway tip, since it can consider as the cutting tooth shape where sharpness was thought as important in the portion used as a two sheet tooth, locating the strengthening part 15 in the portion used as a single tooth in the perimeter tooth of each throwaway tip 101.

[ The 7th embodiment] The another embodiment of the throwaway tip in this invention is explained in Figure 24 as the 7th embodiment, it is explained by using the same mark about the same or similar portion with the throwaway tip in above mentioned each embodiments.

Figure 24(a) is a plan view of the throwaway tip by this embodiment, (b) is the E2 direction side view of the throwaway tip shown in (a), (c) is the F2 direction side view similarly, (d) is the G2 direction side view similarly. The throwaway tip 102 by the 7th embodiment shown in Figure 24 (it may be hereafter called a tip) is made into the shape of approximately square plate late, and the upper face 41 which counters the under face 2 which is the seat face is formed to the plane like inclined so that the distance with the under face 2 may become small gradually towards the second short tooth 7, and therefore, the first long tooth 8 and the second long tooth 9 become linear like tooth from the first short tooth 6 toward the second short tooth 7.

Therefore, in the second short tooth 7, the distance with the under face 2 is formed to the smallest. Moreover, the penetrated hole 5 which penetrates the vertical sides 2 and 41 is punched in the direction which carries out an almost rectangular cross on the under face 2. Or you may it intersect perpendicularly with the upper face 41. Properly, the strengthening portion 15 is constructed in a 4th corner tooth 13 slippage of the first long tooth 8 and a 2nd corner tooth 11 slippage of the second long tooth 9 in this throwaway tip 102. In case that this throwaway tip 102 is equipped in an end mill 30a (20) mentioned above in place of tip 101, if it is equipped not changing the radial rake angle and axial rake angle of each tooth of each tip 102, it can be possible to enlarge the thickness of tip attaching seat 24a, 24b, 31a, 32a, of the back face of tip, and the strength of tooth of a main part 21 of a tool can be improved.

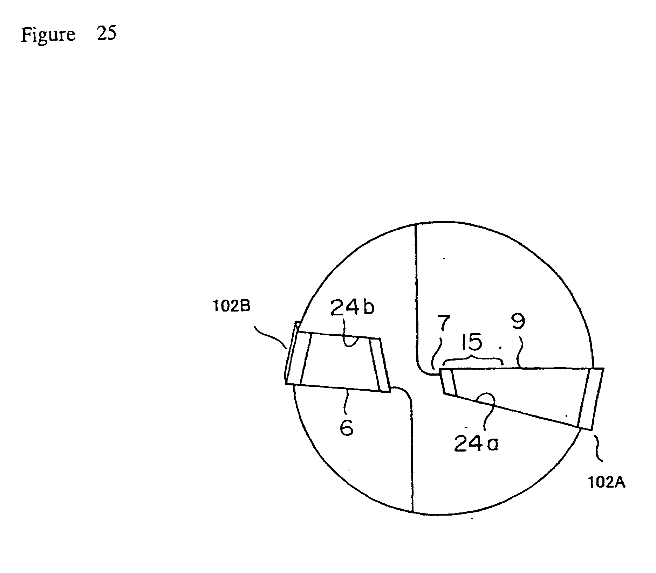

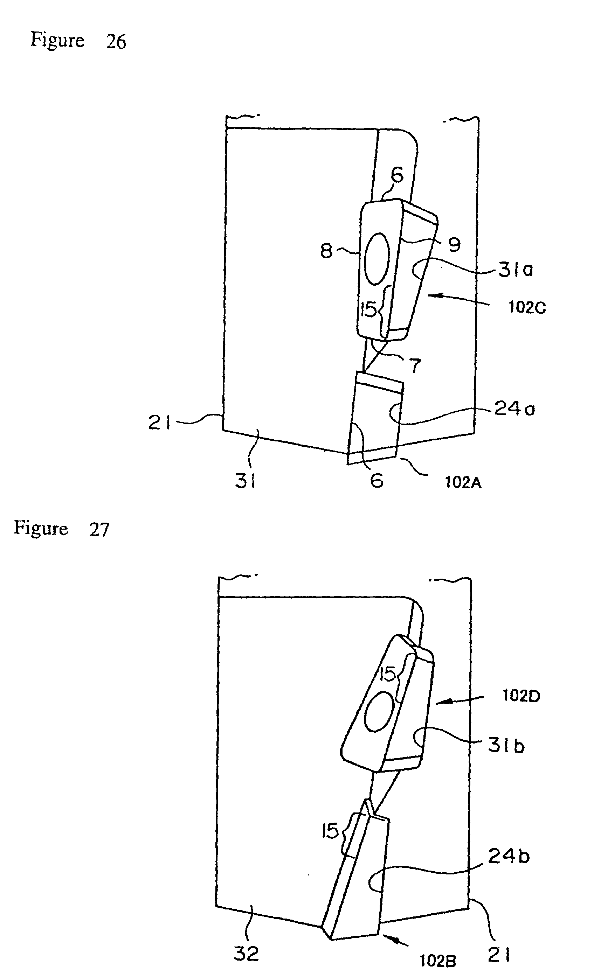

In main tip 102A shown in Figure 25 and the third tip 102C shown in Figure 26, the thickness of the second short tooth 7 side of tip attaching seat 24a, 31 a can be thickened. Moreover, in case that it is equipped on attaching seat not changing the style of seat face (under face 2) of tip 102 or 1, as shown in Figure 27, the axial rake angle of the first long tooth 8 which is each perimeter tooth can be enlarged in sub-tip 102B and the 4 th tip 102 D which the first short tooth 6 is located in a tip portion side, and the sharpness of perimeter cutting can be improved.

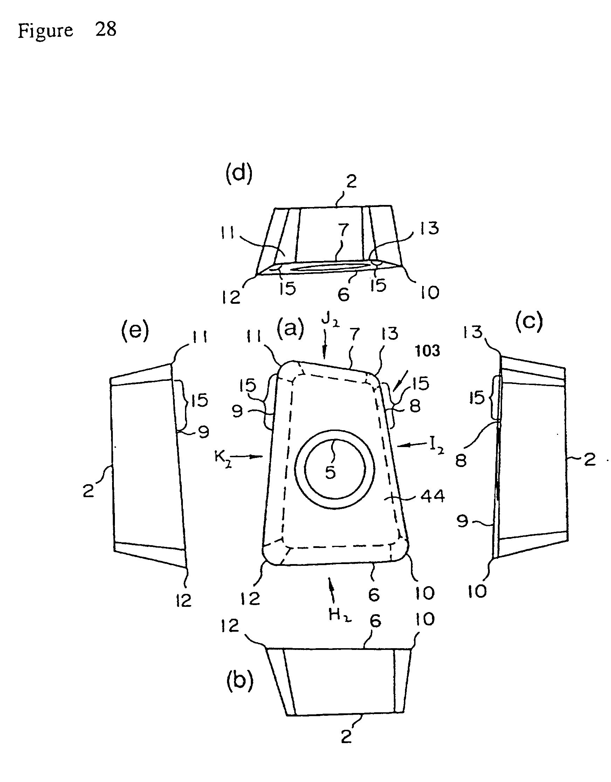

You may have the composition shown in Figure 28 as a modification of a tip 102 by the 7th embodiment. Figure 28(a) is a plan view of the throwaway tip by this embodiment, (b) is a H2 direction side view of the throwaway tip shown in (a), (c) is a I2 direction side view similarly, (d) is J2 direction side view similarly, (e) is K2 direction side view similarly.

The throwaway tip 103 by the modification shown in Figure 28 is made into approximately square plate late, and the upper face 44 which opposite to under face 2 which makes seat face is formed in the twist face, therefore, the 1 st short tooth 6, the 2 nd short tooth 7, the 1 st long tooth 8 and the 2 nd long tooth 9 are the cutting tooth of the shape of a straight line which inclines at respectively voluntary angles so that the distance with the under face 2 may change gradually from the end of a comer tooth towards the other corner edge respectively. Moreover, the penetrating hole 5 which penetrate the vertical face 2, 44 is punched in a direction of approximately rectangular cross on the under face 2. Or you may make it intersect perpendicularly with the upper face 44. If such composition is adopted, according to the attachment position and style of each cutting tooth, a suitable radial rake angle and a axial rake angle can be set up.

In addition, you may establish a breaker slot in the upper face 3, 41, 44. Moreover, the each front face tooth of two sheets of tip 101, 101 ( 102, 102; 103, 103) may be arranged in the position of core going up or core going down. Moreover, in a tip 101, 102, 103 by the 5 th and the 7 th embodiment, the corner angle of the 1 st and three corner tooth 10, 11, 12 of an acute angle is the same or may not be the same. In addition, in each throwaway tip 101, 102, 103 by the 5 th and the 7 th embodiment, and modification, each long tooth 8, 9, short tooth 6, 7 made into straight like, in replace of this, convex curved like or concave curved like may be good also, in this case, the upper face 41, 44 may be sufficient as a convex curved face or concave curved face. Moreover, various cutting tools such as other kind of milling tool, cutting tool by lathe can also be equipped with the throwaway tip by this invention without being limited to end mill 30a.

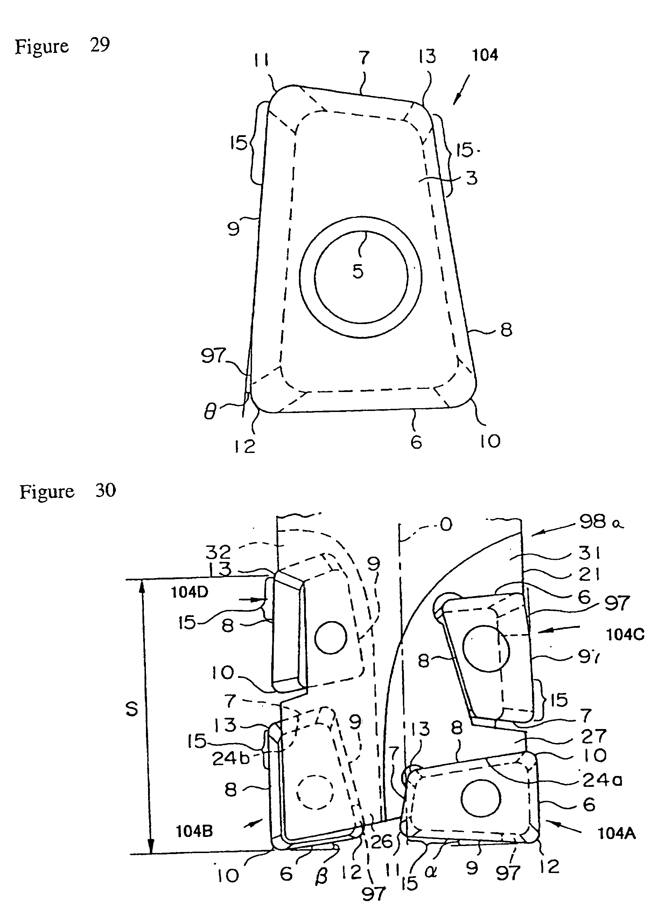

[ the 8th embodiment ] The 8 th embodiment in this invention is explained by using Figure 29 and Figure 30, the explanation is omitted by using the same mark in same or similar portion with the 6 th embodiment mentioned above. Figure 29 is a plan view of the throwaway tip by the 8 th embodiment, Figure 30 is the side view of throwaway type end mill by the 8 th embodiment. In the throwaway tip 101 by the 5 th embodiment shown in Figure 16, the throwaway tip 104 shown in Figure 29 is the one that the sub-cutting tooth 97 which inclines so as to retreat inside of the face 3 of 1 as it approaches the third corner tooth 12 is formed in a edge portion including the third comer tooth 12 of the second long tooth 9.

The sub-cutting tooth 97 inclines at the angle θ(for example, θ = 5°) to the other portion of the second long tooth 9. The throwaway type end mill 98a by the 8 th embodiment is the same composition with the throwaway type end mill 30a by the 6 th embodiment mentioned above, the tip 104 is arranged in replace of tip 101. In a tip portion of a main part 21 of a tool, two concave grooves 31, 32 which is cut in approximately fan shape of cross-section opposite to rotation axis O which makes the rotation center.

The tip attachment seat 24a, 24b is formed in the face of rotation direction in a tip side of each concave grooves 31, 32, the main tip 104A and sub-tip 104B is equipped respectively. The arrangement composition of these tip 104A, 104B is the same that of the tip 101A, 101B by the 6 th embodiment mentioned above. And, In the arrangement composition mentioned above, the sub-cutting tooth 97 which is formed to the second long tooth 9 of the tip 104A is projected to the tip side of a main part 21 of a tool than the other portion of the second long tooth 9. Moreover, the second long tooth 9 of the tip 104B is located inner circumference side of a main part 21 of a tool, and becomes not acting on cutting. And the tip attachment seat 31 a is also formed in the base edge side of a main tip 104A in the other concave groove 31, the throwaway tip 104 mentioned above is equipped as the third tip 104C. This third tip 104C uses the second long tooth 9 as a perimeter tooth, and it project to out side of radius direction from the perimeter face of a main part 21 of a tool, and located almost parallel to rotation axis O, and the second short tooth 7 is arranged towards tip side. In this arrangement composition, the sub-cutting tooth 97 which formed in the third tip 104C is escaped to the inner side of the main part 21 of tool to the other portion of the second long tooth 9. Next, in the other concave groove 32, the tip attaching seat 31b is also formed in a base edge side of sub-tip 104B, and the throwaway tip 104 mentioned above is equipped as the 4 th tip 104D. This 4 th tip 104D uses the 1 st long tooth 8 as perimeter tooth, and it projects to out side of radius direction from perimeter face of a main part 21 of a tool, and located in almost parallel to the rotation axis O, and the 1 st short tooth 6 is arranged towards tip side. In this arrangement composition, the second long tooth 9 of the tip 104D is located in the inner circumference side of a main part 21 of a tool, don't act on a cutting. According to the end mill 98a by this 8 th embodiment, the sub-cutting tooth 97 of a tip 104A can be used as a finish cutting in a throwaway tip 104, the sub-cutting tooth 97 in other tip 104B, 104C, 104D don't act in cutting of work material. Thus, in end mill 98a, since the proceeding of wear of sub-cutting tooth 97 is restricted except the case that the second long tooth 9 is used as front face tooth, the sharpness of sub-cutting tooth97 in throwaway tip 104 can be secured, when it was done the finish machining of work material by sub-cutting tooth97 as the front face tooth, it can be acquired a good finished surface. Moreover, in tip 104D which located in the most base edge side of a main part 21 of a tool, since the first long tooth 8 not forming the sub-cutting tooth 97 is used as a perimeter tooth, the maximum depth of cut S of throwaway type cutting tool can be secured, forming sub-cutting tooth 97 in second long tooth 9. In addition, the arrangement number of sheets is not necessarily four sheets, you may arrange three or more than five sheets. Moreover, in the 8 th embodiment mentioned above, the sub-cutting tooth 97 is constructed to the second long tooth 9 in throwaway tip 101 by the 5 th embodiment shown in Figure 16, however, for example, the sub-cutting tooth97 is formed to the second long tooth 9 in either not only of this but the throwaway tip 102 or 103. Moreover, the throwaway tip 104 may be not only equipped with end mill 98a but also other end mill.

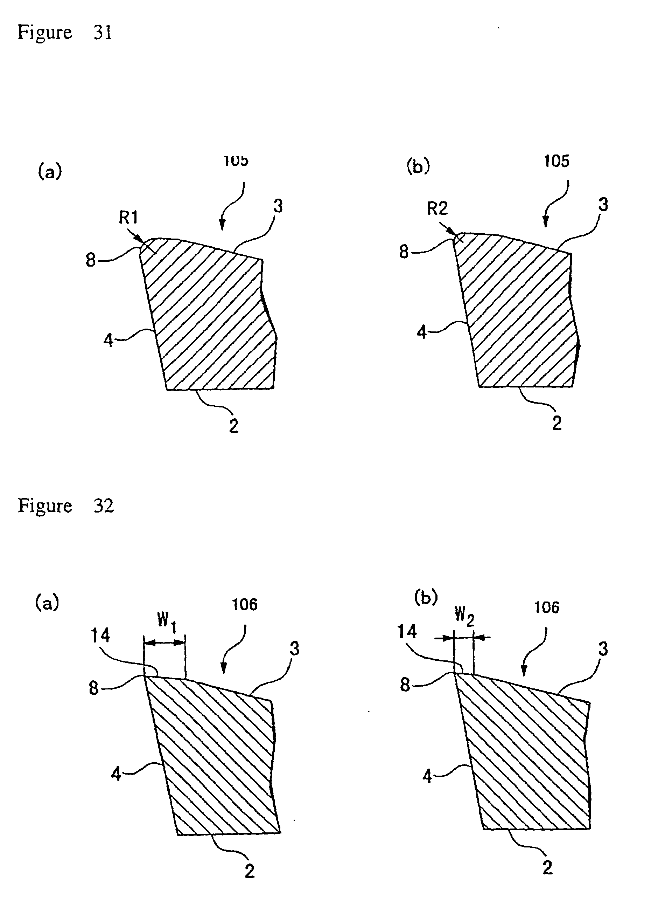

[ the 9th embodiment ] the 9 th embodiment of the throwaway tip in this invention as another example is shown in Figure 31, it is explained by using the same mark in a same or similar portion with the throwaway tip 101 by the 5 th embodiment. Figure 31 is a sectional view showing the cross-sectioned form of each portion of throwaway tip in this embodiment, (a) is a sectional view corresponding to L-L line sectioned view of throwaway tip by the 5 th embodiment, (b) is a sectional view corresponding to M-M line sectioned view of throwaway tip by the 5 th embodiment. The throwaway tip 105 (hereinafter, may be called as a tip) by the 9 th embodiment shown in Figure 31 has an almost same shape with that of the throwaway tip 101 shown in Figure 16, the circle honing is given in each cutting tooth. And it differs to the throwaway tip 101, the strengthening portion 15 of the first and second long tooth 8, 9 is not made as small the rake angle to other portion, made as the following compositions.

Namely, the strengthening portion 15 of first long tooth 8 is constructed as follows , as shown in a section view of Figure 31, the curvature radius R1 of the tip of tooth portion of second corner tooth 11 slippage in the first long tooth 8 is made larger than that R2 of the other portion of the first long tooth 8 (refer to Figure 31 (b) ). Similarly, the strengthening portion 15 in the second long tooth 9 is also constructed so that the curvature radius of a tip of tooth of the 4 th corner tooth slippage R1 is made larger than that R2 of other portion of the 1 st long tooth 8 (not shown in figure). The strengthening portion 15 is taking the curvature radius of the tip of the tooth larger than other portions, raises the cutting strength of this portion. Here, the curvature radius R1 of the strengthening portion 15 comrades or the curvature radius R2 of other than strengthening portion 15 is good also as the same with the first long tooth 8 and the second long tooth 9, and it can also consider as a curvature radius different, respectively.

[ the 10th embodiment ] The 10th embodiment of the throwaway tip in this invention as another example is shown in Figure 32, it is explained by using the same mark about the same or similar portion with the throwaway tip 101 by the 5th embodiment. Figure 32 is a sectional view showing the cross-sectioned form of each portion of throwaway tip in this embodiment, (a) is a sectional view corresponding to L-L line sectioned view of the throwaway tip by 5 th embodiment, (b) is a sectional view corresponding to M-M line sectioned view of the throwaway tip by the 5 th embodiment. The throwaway tip 106 (hereinafter may be called as a tip) by the 10 th embodiment shown in Figure 32 is the almost same as that of the throwaway tip 101 shown in Figure 16. And it differs in the throwaway tip 101, the strengthening portion 15 of the 1 st, 2 nd long tooth 8, 9 is not made the rake angle to the other portion small, but considers as the as the compositions which is described below. Namely, as shown in a sectional view of Figure 32 (a), the width W1 of land portion 14 of the 2 nd comer tooth 11 slippage in the 1 st long tooth 8 is made larger than that W2 (refer to Figure 25 (b) ) of the land part 14 of the other portion of the 1st long tooth 8. Similarly, in the second long tooth 9, the strengthening portion 15 is constructed as that the width W1 of land part 14 of the 4 th corner tooth 13 slippage is made larger than that W2 of land part 14 of other portion of the 1 st long tooth 8 (not shown in figure).

The strengthening portion 15 is takeing the width W1 of the land part 14 larger than other portions, and raises the strength of the cutting tooth of this portion. Here, the width W1 of the land part 14 in each strengthening portion 15 with the 1 st long tooth 8 and 2 nd long tooth 9 is made the same to the width W2 of land part 14 of the other portion than the strengthening portion 15, or it can also consider as width different, respectively. In addition, in tip 102, 103, 104 by the 7 th, 8 th embodiment mentioned above, the example which formed the strengthening portion 15 by the same composition with the strengthening portion 15 of the throwaway tip 101 shown in the 5 th embodiment, however, without being restricted to this, the composition of the strengthening portion 15 is good also as which composition of the throwaway tip 101, 105, 106 shown in the 5 th, the 9 th , the 10 th embodiment, and is good also as what combined these composition.

## Claims

1. Throwaway tip (1,40) in which the corner angle of two corner edges is 90°or less, and the other two corner edges which counter including these corner edges (10,12), respectively, are non-parallel edges while the shape of the tip is that of an approximately square shape plate, **characterised in that** all side faces between an upper face (3) acting as a rake face and a seating face (2) have a positive flank angle which is less than 90° against the rake face.

2. The throwaway tip of the claim 1 characterized that the other of the another two corner tooth of one face is the corner angle of 90 or less.

3. The throwaway tip of claim 1 characterized that the other two corner edge of one face is made as non-parallel tooth.

4. The throwaway tip of claim 1 characterized that the two pair of non-parallel tooth opposite each other inclines the length from the seating face opposite to one face so as to change gradually from the one edge side toward the other edge side.

5. The throwaway tip of claim 1 characterized that the other of another two corner tooth of the one face is the corner angle of 90 °or less, the cutting tooth including one of this corner tooth and the other corner tooth is made into a long tooth, in this long tooth, in the edge portion including one of the other corner tooth, the sub-cutting tooth is formed, inclination to the other portion so as to retreat inside of one face as this sub-cutting tooth is approached to the corner tooth.

6. The throwaway tip of claim 1 characterized that non-parallel two tooth is made as long tooth, the opposite two cutting tooth is made as short tooth, in this long tooth, the portion of the other corner tooth slippage is made as the strengthening portion which the cutting tooth is strengthened than that of the another respectively.

7. The throwaway tip of claim 6 characterized that the strengthening portion is constructed so that the rake angle of long tooth is made as small than that of the other of long tooth.

8. The throwaway tip of claim 6 characterized that the circle honing is treated in each cutting tooth, and the strengthening portion is made so that the curvature radius of the tip of cutting tooth in strengthened portion is larger than that of another portion of long tooth.

9. The throwaway tip of claim 6 characterized that the land part is formed in each cutting tooth in one face, and the strengthening portion is made so that the width of land part in strengthened portion is larger than that of another portion of long tooth.

10. The throwaway tip of claim 6 characterized that the other of another two corner tooth of one face has a corner angle of 90°or less, in the long tooth including this corner tooth, the sub-cutting tooth which inclines to another portion so that it may retreat inside of one face as approaching to this corner tooth is formed.

11. Throwaway type cutting tool characterized that two or more throwaway tips of which the tooth is respectively projected and arranged to the tip side of a main part of tool are equipped, the throwaway tip is made as the same as the throwaway tip of claim 1, these two or more throwaway tips are arranged of which two corner tooth adjoining each other is projected and arranged respectively to the perimeter side of a tip of a main part of a tool.

12. The throwaway type cutting tool of claim 11 characterized that the throwaway tip of which one corner tooth is projected to the perimeter side of a tip of a main part of a tool is the one of which the tooth prolonged to inside of radius direction of a main part of tool from this corner tooth is prolonged till to the rotation axis line of a main part of a tool as front face tooth.

13. The throwaway type cutting tool of claim 11 characterized that the one non-parallel two tooth of throwaway tip is made into a long tooth, the another non-parallel two tooth is made into a short tooth, the one of two or more throwaway tips projected to a tip side of a main part of tool uses a long tooth as a front face tooth, and a short tooth as a perimeter tooth, and the others are arranged the short tooth as a front face tooth and a long tooth as perimeter tooth to a tip of a main part of a tool.

14. The throwaway type cutting tool of claim 13 characterized that the same throwaway tip which the long tooth is made as a perimeter tooth to a base edge side of one throwaway tip is arranged in a main part of a tool, and the rotation axis of a perimeter tooth is overlapped in the rotating around of the rotation axis line of a main part of a tool.

15. Throwaway type cutting tool characterized that two or more throwaway tip is as the throwaway tip of claim5, the one of two or more throwaway tip is made the long tooth having a sub cutting tooth as a front face tooth, the short tooth as a perimeter tooth, and the long tooth having sub- cutting tooth is projected and arranged to a tip side of a tool than another portion of long tooth, and the other is arranged a short tooth as a front face tooth, a long tooth as a perimeter tooth, the same throwaway tip of which the long tooth is as a perimeter tooth is arranged to a base edge side of a throwaway tip, the rotation axis of each perimeter tooth is overlapped in case of rotation around to a rotation axis line of a main part of a tool, in case that the long tooth having sub-cutting tooth about throwaway tip is as a perimeter tooth, the sub-cutting tooth is located in the circumference side in a tool than another portion of the long tooth and it may not act on cutting of work material.

16. Throwaway type cutting tool characterized that the two or more throwaway tip is as the throwaway tip of claim 6, the one of throwaway tip is arranged a long tooth as a front face tooth, a short tooth as a perimeter tooth, the other is arranged a short tooth as front face tooth, and a long tooth as a perimeter tooth, locating the strengthening portion in not overlapping portion of a rotation axis with a perimeter tooth of one throwaway tip.

17. The throwaway type cutting tool of claim 16 characterized that the same throwaway tip of which the long tooth is as a perimeter tooth is arranged on a base edge side of a throwaway tip, the rotation axis of each perimeter tooth is made to be overlapped in case of rotating around rotation axis line of a main part of a tool, and the strengthening portion is located so that the rotation axis is not overlapped with another perimeter tooth, in perimeter tooth respectively.

18. Throwaway type cutting tool characterized that two or more throwaway tips is the same throwaway tip of claim 10, and one of these two or more throwaway tips is made the long tooth having a sub-cutting tooth as a front face tooth, a short tooth as a perimeter tooth, and the long tooth having a sub-cutting tooth is arranged so that a sub-cutting tooth is projected to a tip side of a tool than another portion of long tooth, and the other is arranged the short tooth as a front face tooth, the long tooth as a perimeter tooth, and the same throwaway tip of which the long tooth is as a perimeter tooth is arranged on a base edge side of a throwaway tip in a main part of a tool, and the rotation axis of each perimeter tooth is overlapped in case of rotating around a rotation axis line of a main part of a tool, and the strengthening portion is arranged to be located in a portion that the rotation axis is not overlapped with another perimeter tooth, in a perimeter tooth of a throwaway tip, and in case that the long tooth having a sub-cutting tooth about another tip is made as a perimeter tooth, the sub-cutting tooth may be located in the circumference side rather than another portion of a long tooth and it may not act on cutting of work material.

## Patentansprüche

1. Wendeschneidplatte zum Wegwerfen (1, 40), bei welcher der Eckwinkel von zwei Eckkanten 90° oder weniger beträgt, und wobei die anderen zwei Eckkanten, die zu diesen Eckkanten (10, 12) jeweils entgegengesetzt sind, nicht-parallele Kanten sind, während die Form der Platte ungefähr die einer rechteckigen Scheibe ist, **dadurch gekennzeichnet, dass** sämtliche Seitenflächen zwischen einer oberen Fläche (3), die als eine Spanfläche wirkt, und einer Sitzfläche (2), einen positiven Flankenwinkel aufweisen, der weniger als 90° gegen die Spanfläche beträgt.

2. Wendeschneidplatte nach Anspruch 1, **dadurch gekennzeichnet, dass** der andere der anderen zwei Eckzähne von einer Fläche der Eckwinkel von 90° oder weniger ist.

3. Wendeschneidplatte nach Anspruch 1, **dadurch gekennzeichnet, dass** die anderen zwei Eckkanten von einer Fläche als nicht-parallele Zähne ausgeführt sind.

4. Wendeschneidplatte nach Anspruch 1, **dadurch gekennzeichnet, dass** die zwei Paare einander gegenüberliegender, nicht-paralleler Zähne, der Länge nach geneigt sind, von der Sitzfläche gegenüber einer Fläche, um allmählich von der einen Eckseite zu der anderen Eckseite zu wechseln.

5. Wendeschneidplatte nach Anspruch 1, **dadurch gekennzeichnet, dass** der andere der anderen zwei Eckzähne der einen Fläche der Eckwinkel von 90° oder weniger ist, wobei der Schneidzahn einen dieser Eckzähne aufweist, und der andere Eckzahn als ein langer Zahn ausgeführt ist, wobei in diesem langen Zahn, in dem Eckabschnitt, der einen der anderen Eckzähne aufweist, der Neben-Schneidzahn ausgebildet ist, mit einer Neigung zu dem anderen Abschnitt, um sich innen von einer Fläche zurückzuziehen, wenn dieser Neben-Schneidzahn an den Eckzahn angenähert wird.

6. Wendeschneidplatte nach Anspruch 1, **dadurch gekennzeichnet, dass** die nicht-parallelen zwei Zähne als lange Zähne ausgeführt sind, die gegenüberliegenden zwei Schneidzähne als kurze Zähne ausgeführt sind, wobei in diesem langen Zahn der Abschnitt des anderen Eckzahnschlupfes (corner tooth slippage) als der Verstärkungsabschnitt ausgeführt ist, in dem das Schneidwerkzeug verstärkter als der jeweils andere ist.

7. Wendeschneidplatte nach Anspruch 6, **dadurch gekennzeichnet, dass** der Verstärkungsabschnitt derart konstruiert ist, dass der Spanwinkel des langen Zahns so klein ausgeführt ist, wie der des anderen langen Zahns.

8. Wendeschneidplatte nach Anspruch 6, **dadurch gekennzeichnet, dass** jeder Schneidzahn mit Kreishonen behandelt wird, und der Verstärkungsabschnitt derart ausgeführt ist, dass der Krümmungsradius der Spitze des Schneidezahns in dem verstärkten Abschnitt größer ist, als der von einem anderen Abschnitt des langen Zahns.

9. Wendeschneidplatte nach Anspruch 6, **dadurch gekennzeichnet, dass** das Fasenteil in jedem Schneidzahn in einer Fläche ausgebildet ist, und der Verstärkungsabschnitt derart ausgeführt ist, dass die Breite des Fasenteils in dem Verstärkungsabschnitt größer ist, als die eines anderen Abschnitts des langen Zahns.

10. Wendeschneidplatte nach Anspruch 6, **dadurch gekennzeichnet, dass** der andere der anderen zwei Eckzähne von einer Fläche einen Eckwinkel von 90° oder weniger aufweist, in dem langen Zahn, der diesen Eckzahn aufweist, wobei der Neben-Schneidzahn, der sich derart zu einem anderen Abschnitt neigt, dass er sich innen von einer Fläche zurückziehen kann, wenn er sich an diesen Eckzahn annähert, ausgebildet ist.

11. Wegwerf-Schneidwerkzeug, **dadurch gekennzeichnet, dass** zwei oder mehr Wegwerfplatten, von denen der Zahn jeweils vorstehend und an der Spitzenseite eines Hauptteils des Werkzeugs angeordnet ist, vorgesehen sind, wobei die Wegwerfplatte als die gleiche wie die Wegwerfplatte des Anspruchs 1 ausgeführt ist, wobei diese zwei oder mehr Wegwerfplatten angeordnet sind, von denen zwei aneinander angrenzende Eckzähne vorstehen und jeweils an der Umfangsseite einer Spitze eines Hauptteils eines Werkzeugs angeordnet sind.

12. Wegwerf-Schneidwerkzeug nach Anspruch 11, **dadurch gekennzeichnet, dass** die Wegwerfplatte, von der ein Eckzahn zu der Umfangsseite einer Spitze eines Hauptteils eines Werkzeugs vorsteht, diejenige ist, von welcher der Zahn nach innen zu der Radiusrichtung eines Hauptteils des Werkzeugs verlängert ist, von welcher dieser Eckzahn bis zu der Drehachsenlinie eines Hauptteils eines Werkzeugs verlängert ist, als ein Vorderflächenzahn.

13. Wegwerf-Schneidwerkzeug nach Anspruch 11, **dadurch gekennzeichnet, dass** die einen nicht-parallelen zwei Zähne der Wegwerfplatte in einen langen Zahn ausgeführt sind, die anderen nicht-parallelen zwei Zähne in einen kurzen Zahn ausgeführt sind, wobei die eine von zwei oder mehr Wegwerfplatten, die zu einer Spitzenseite eines Hauptteils des Werkzeugs vorstehen, einen langen Zahn als einen Vorderflächenzahn, und einen kurzen Zahn als einen Umfangszahn verwenden, und wobei bei den anderen der kurze Zahn als ein Vorderflächenzahn und ein langer Zahn als Umfangszahn, zu einer Spitze eines Hauptteils eines Werkzeugs, angeordnet sind.

14. Wegwerf-Schneidwerkzeug nach Anspruch 13, **dadurch gekennzeichnet, dass** die gleiche Wegwerfplatte, deren langer Zahn als ein Umfangszahn zu einer Seitenkantenseite einer Wegwerfplatte ausgeführt ist, in einem Hauptteil eines Werkzeugs angeordnet ist, und die Drehachse eines Umfangszahns beim Drehen um die Drehachsenlinie eines Hauptteils eines Werkzeugs überlappt wird.

15. Wegwerf-Schneidwerkzeug, **dadurch gekennzeichnet, dass** zwei oder mehr Wegwerfplatten wie die Wegwerfplatte des Anspruchs 5 sind, wobei die eine von zwei oder mehr Wegwerfplatten als der lange Zahn mit einem Neben-Schneidzahn als ein Vorderseitenzahn, dem kurzen Zahn als einen Umfangszahn ausgeführt ist, und wobei der lange Zahn mit dem Neben-Schneidzahn vorsteht und an einer Spitzenseite eines Werkzeugs angeordnet ist, als ein anderer Abschnitt des langen Zahns, und wobei bei der anderen ein kurzer Zahn als ein Vorderflächenzahn, ein langer Zahn als ein Umfangszahn angeordnet ist, wobei die gleiche Wegwerfplatte, von welcher der lange Zahn ein Umfangszahn ist, an einer Seitenkantenseite der Wegwerfplatte angeordnet ist, wobei die Drehachse jedes Umfangszahns im Fall einer Drehung um eine Drehachsenlinie eines Hauptteils eines Werkzeugs überlappt wird, wobei in dem Fall, dass der lange Zahn mit dem Neben-Schneidzahn um die Wegwerfplatte ein Umfangszahn ist, sich der Neben-Schneidzahn in der Umfangsseite in einem Werkzeug befindet, als ein anderer Abschnitt des langen Zahns, und er nicht am Schneiden von Werkstückmaterial mitwirken kann.

16. Wegwerf-Schneidwerkzeug, **dadurch gekennzeichnet, dass** die zwei oder mehr Wegwerfplatten wie die Wegwerfplatte des Anspruchs 6 sind, wobei bei der einen der Wegwerfplatten ein langer Zahn als ein Vorderseitenzahn, ein kurzer Zahn als ein Umfangszahn angeordnet ist, und wobei bei der anderen als ein kurzer Zahn als Vorderflächenzahn, und ein langer Zahn als ein Umfangszahn angeordnet ist, wobei sich der Verstärkungsabschnitt in einem nicht-überlappenden Abschnitt einer Drehachse mit einem Umfangszahn von einer Wegwerfplatte befindet.

17. Wegwerf-Schneidwerkzeug nach Anspruch 16, **dadurch gekennzeichnet, dass** die gleiche Wegwerfplatte, deren langer Zahn ein Umfangszahn ist, an einer Seitenkantenseite einer Wegwerfplatte angeordnet ist, wobei die Drehachse jedes Umfangszahns im Fall des Drehens um eine Drehachsenlinie eines Hauptteils eines Werkzeugs überlappend ausgeführt wird, und der Verstärkungsabschnitt so gelegen ist, dass die Drehachse nicht mit einem anderen Umfangszahn überlappt, beziehungsweise in den Umfangszahn.

18. Wegwerf-Schneidwerkzeug, **dadurch gekennzeichnet, dass** zwei oder mehr Wegwerfplatten die gleichen wie die Wegwerfplatte des Anspruchs 10 sind, und eine dieser zwei oder mehr Wegwerfplatten als der lange Zahn mit einem Neben-Schneidzahn als ein Vorderseitenzahn, einem kurzen Zahn als einen Umfangszahn ausgeführt ist, und wobei der lange Zahn mit einem Neben-Schneidzahn derart angeordnet ist, dass ein Neben-Schneidzahn zu einer Spitzenseite eines Werkzeugs vorsteht, als ein anderer Abschnitt des langen Zahns, und wobei bei der anderen der kurze Zahn als ein Vorderflächenzahn, der lange Zahn als ein Umfangszahn angeordnet ist, und wobei die gleiche Wegwerfplatte, von welcher der lange Zahn ein Umfangszahn ist, an einer Seitenkantenseite einer Wegwerfplatte in einem Hauptteil eines Werkzeugs angeordnet ist, und wobei die Drehachse jedes Umfangszahns im Fall des Drehens um eine Drehachsenlinie eines Hauptteils eines Werkzeugs überlappt wird, und wobei der Verstärkungsabschnitt derart angeordnet ist, dass er in einem Abschnitt so gelegen ist, dass die Drehachse nicht mit einem anderen Umfangszahn überlappt, in einen Umfangszahn einer Wegwerfplatte, und in dem Fall, dass der lange Zahn mit einem Neben-Schneidzahn um eine andere Spitze als ein Umfangszahn ausgeführt ist, sich der Neben-Schneidzahn in der Umfangsseite befindet, eher als ein anderer Abschnitt eines langen Zahns, und er nicht am Schneiden von Werkstückmaterial mitwirken kann.

## Revendications

1. Plaquette amovible (1, 40) dans laquelle l'angle dièdre de deux bords de coin est de 90° ou inférieur, et les autres deux bords de coins dont le plan de travail comportant ces bords de coin (10, 12), respectivement, sont des bords non parallèles tandis que la forme de la plaquette est approximativement celle d'une plaque en forme de carré, **caractérisée en ce que** toutes les faces latérales entre une face supérieure (3) agissant comme une face inclinée et une face d'assise (2) ont un angle du flanc qui est inférieur à 90° contre la face inclinée.

2. Plaquette amovible selon la revendication 1, **caractérisée en ce que** l'autre d'une autre dent de deux coins d'une face ont l'angle dièdre de 90 ou inférieur.

3. Plaquette amovible selon la revendication 1, **caractérisée en ce que** l'autre bord de deux coins d'une face est fait comme une dent non parallèle.

4. Plaquette amovible selon la revendication 1, **caractérisée en ce que** les deux paires de dent non parallèles opposées l'une à l'autre inclinent la longueur depuis la face d'assise opposée à une face de façon à changer graduellement depuis un bord latéral vers l'autre bord latéral.

5. Plaquette amovible selon la revendication 1, **caractérisée en ce que** l'autre d'une autre dent de deux coins d'une face ont l'angle dièdre de 90° ou inférieur, la dent de coupe comprenant l'une de cette dent de coin et l'autre dent de coin est faite en une longue dent, dans cette dent longue, dans la partie de bord comprenant l'une de l'autre dent de coin, la dent de sous coupe est formée, en inclinaison vers l'autre partie de façon à être en retrait à l'intérieur d'une face lorsque cette dent de sous coupe est approchée de la dent de coin.

6. Plaquette amovible selon la revendication 1, **caractérisée en ce que** les deux dents non parallèles sont faites comme des dents longues, les deux dents de coupe opposées sont faites comme des dents courtes, dans cette dent longue, la partie de glissement de l'autre dent de coin est faite sous la forme d'une partie de renforcement dont l'outil de coupe est renforcé plus que celui d'une autre, respectivement.

7. Plaquette amovible selon la revendication 6, **caractérisée en ce que** la partie de renforcement est construite de telle façon que l'angle d'inclinaison de la dent longue soit fait aussi petit que celui de l'autre dent longue.

8. Plaquette amovible selon la revendication 6, **caractérisée en ce que** l'on traite le pierrage de disque dans chaque dent de coupe, et la partie de renforcement est faite de façon à ce que le rayon de courbure de la plaquette de la dent de coupe dans la partie renforcée soit plus grand que celui d'une autre partie de dent longue.

9. Plaquette amovible selon la revendication 6, **caractérisée en ce que** la partie de plage est formée dans chaque dent de coupe dans une face, et la partie de renforcement est faite de façon à ce que la largeur de la partie de plage dans la partie renforcée est plus grande que celle d'une autre partie de dent longue.

10. Plaquette amovible selon la revendication 6, **caractérisée en ce que** l'autre d'une autre dent de deux coins d'une face ont un angle dièdre de 90° ou inférieur, dans la dent longue comprenant cette dent de coin, la dent de sous coupe qui s'incline vers une autre partie de façon à pouvoir se retirer à l'intérieur d'une face lorsqu'elle s'approche de cette dent de coin est formée.

11. Outil de coupe de type à plaquette amovible **caractérisé en ce qu'**elle est équipée de deux ou plusieurs plaquettes amovibles desquelles la dent est respectivement projetée et arrangée sur le côté de la plaquette d'une partie principale de l'outil, la plaquette amovible est faite de façon identique à la plaquette amovible selon la revendication 1, ces deux ou plusieurs plaquettes amovible sont arrangées de telle façon que la dent de deux coins adjacents l'un à l'autre soit projetée et arrangée respectivement au périmètre latéral d'une plaquette d'une partie principale d'un outil.

12. Plaquette amovible selon la revendication 11, **caractérisée en ce que** la plaquette amovible de laquelle une dent de coin est projetée vers le périmètre latéral d'une plaquette d'une partie principale d'un outil est celle de laquelle la dent prolongée vers l'intérieur de la direction du rayon d'une partie principale d'outil depuis cette dent de coin est prolongée jusqu'à la ligne de l'axe de rotation d'une partie principale d'un outil comme dent de face avant.

13. Outil de coupe de type amovible selon la revendication 11, **caractérisé en ce qu'**une des deux dents non parallèles de la plaquette amovible est faite dans une dent longue, l'autre des deux dents non parallèles est faite dans une dent courte, l'une de deux ou plusieurs plaquettes amovibles projetées sur un côté de plaquette d'une partie principale de l'outil utilise une dent longue comme dent de face avant, et une dent courte comme dent de périmètre, et les autres sont arrangées de façon que la dent courte soit une dent de face avant et la dent longue soit une dent de périmètre d'une plaquette de la partie principale d'un outil.

14. Outil de coupe de type amovible selon la revendication 13, **caractérisé en ce que** la même plaquette amovible qui a la dent longue en tant que dent de périmètre à un bord de base latéral d'une plaquette amovible est arrangée dans une partie principale d'un outil, et l'axe de rotation d'une dent de périmètre est chevauché en rotation autour de la ligne d'axe de rotation d'une partie principale d'un outil.

15. Outil de coupe de type amovible **caractérisé en ce que** deux ou plusieurs plaquettes amovibles sont comme la plaquette amovible selon la revendication 5, l'une de deux ou plusieurs plaquettes amovibles sont faites avec la dent longue ayant une dent de sous coupe comme dent de face avant, la dent courte comme dent de périmètre, et la dent longue ayant une dent de sous coupe est projetée et arrangée à un côté de plaquette d'un outil plutôt qu'une autre partie de dent longue, et l'autre est arrangée en dent courte comme une dent de face avant, une dent longue comme une dent de périmètre, la même plaquette amovible de laquelle la dent longue est une dent de périmètre qui est arrangée à un côté de bord de base d'une plaquette amovible, l'axe de rotation de chaque dent de périmètre est chevauché dans le cas de rotation autour d'une ligne d'axe de rotation d'une partie principale d'un outil, dans le cas où la dent longue ayant une dent de sous coupe autour de la plaquette amovible est une dent de périmètre, la dent de sous coupe est placée dans le côté de circonférence dans un outil qu'une autre partie de la dent longue et il peut ne pas agir en coupant le matériau de travail.

16. Outil de coupe de type amovible **caractérisé en ce que** les deux ou plusieurs plaquettes amovibles sont comme la plaquette amovible selon la revendication 6, l'une des plaquettes amovibles est arrangée avec une dent longue comme dent de face avant, une dent courte comme dent de périmètre, l'autre est arrangée avec une dent courte comme dent de face avant, et une dent longue comme dent de périmètre, plaçant la partie de renforcement en partie de non chevauchement d'un axe de rotation avec une dent de périmètre d'une plaquette amovible.

17. Outil de coupe de type amovible selon la revendication 16, **caractérisé en ce que** la même plaquette amovible dans laquelle la dent longue est une dent de périmètre est arrangée sur un côté de bord de base de la plaquette amovible, l'axe de rotation de chaque dent de périmètre est fait pour être chevauché en cas de rotation autour de la ligne de l'axe de rotation d'une partie principale d'un outil, et la partie de renforcement est placée de façon à ce que l'axe de rotation ne soit pas chevauché avec une autre dent de périmètre, dans la dent de périmètre, respectivement.

18. Outil de coupe de type amovible **caractérisé en ce que** deux ou plusieurs plaquettes amovibles sont les mêmes plaquettes amovibles que celles de la revendication 10, et l'une de ces deux ou plusieurs plaquettes amovibles est faite avec une dent longue ayant une dent de sous coupe comme dent de face avant, une dent courte comme dent de périmètre, et la dent longue ayant une dent de sous coupe est arrangée de façon que la dent de sous coupe soit projetée vers le côté d'une plaquette d'un outil d'une autre partie de dent longue, et l'autre est arrangée en dent courte comme dent de face avant, la dent longue comme une dent de périmètre, et la même plaquette amovible dont la dent longue est comme la dent de périmètre est arrangée sur la base d'un bord latéral d'une plaquette amovible dans une partie principale d'un outil, et l'axe de rotation de chaque dent de périmètre est chevauché en cas de rotation autour d'une ligne d'axe de rotation d'une partie principale d'un outil, et la partie de renforcement est arrangée de façon à être placée dans une partie où l'axe de rotation n'est pas chevauché avec une autre dent de périmètre, dans une dent de périmètre d'une plaquette amovible, et dans le cas où la dent longue ayant une dent de sous coupe autour d'une autre plaquette est faite comme dent de périmètre, la dent de sous coupe peut être placée dans le côté de circonférence plutôt que dans une autre partie d'une dent longue et elle peut ne pas agir sur la coupe du matériau de travail.
